# EUROPEAN PATENT APPLICATION

(11) **EP 3 666 084 A1**
(43) Date of publication of application: **17.06.2020**
(21) Application number: 20156083.6
(22) Date of filing: 15.03.2013
(51) Int. Cl.: A23G 4/02, B29C 48/425, B29C 48/88

(54) **SYSTEM AND METHOD FOR MANUFACTURING CHEWING GUM**

(30) Priority: 20.04.2012 US 201261636068 P; 17.08.2012 US 201261684495 P
(62) Divisional of application: 13713310.4
(71) Applicant: Intercontinental Great Brands LLC, East Hanover, NJ 07936 (US)
(72) Inventor: VISSCHER, Glenn Thompson, East Hanover, NJ New Jersey 07936 (US); BINDRA, Mandeep, East Hanover, NJ New Jersey 07936 (US); KIEFER, Jesse John, East Hanover, NJ New Jersey 07936 (US); SIMBUERGER, Dieter Stephan, East Hanover, NJ New Jersey 07936 (US); PEARSON, Stephen Malcolm, East Hanover, NJ New Jersey 07936 (US); LUTZ, Dieter, East Hanover, NJ New Jersey 07936 (US); MOORE, Philip, East Hanover, NJ New Jersey 07936 (US)
(74) Representative: Boult Wade Tennant LLP

(57) **Abstract**

Disclosed is a method for manufacturing chewing gum, the method including feeding one or more gum ingredients including at least an elastomer into a continuous extruder including a plurality of screws, rotating said plurality of screws and mixing said one or more ingredients via said rotating of said plurality screws within said continuous extruder;
forming a partial chewing gum base via said mixing of said one or more ingredients;
creating a flow of said partial chewing gum base including said one or more ingredients through said continuous extruder towards a downstream extent of said plurality of screws via said rotating;
conveying said flow of said partial chewing gum base to a region of said continuous extruder that is proximate said downstream extent of said plurality of screws, wherein said flow of said partial chewing gum includes a first temperature when said flow reaches said region that is proximate said downstream extent of said plurality of screws;
transporting said flow of said partial chewing gum base from said downstream extent of said plurality of screws to a downstream processing device, said flow of said partial chewing gum base reaching said downstream processing device at a second temperature; and
wherein said second temperature of said flow is within 20 degrees Celsius of said first temperature of said flow upon said reaching of said downstream processing device.

## Description

### FIELD

The disclosure relates generally to a system and method for manufacturing gum, and more particularly to a system and method for manufacturing gum via a continuous extruder.

### BACKGROUND

Conventional continuous mixers and extruders used in gum manufacturing can create temperatures upwards of 180 degrees Celsius during mastication and plasticization of gum base ingredients such as elastomer. These conventional extruders, such as single and twin screw extruders, do not include any efficient means of reducing post-masticated gum base temperature to a point where effective pelletization can occur immediately following extrusion of the base ingredients. Instead, such conventional extruders necessitate use of heat exchange systems disposed separately and downstream of the extruder, with these heat exchange systems being responsible for actively cooling the base ingredients prior to entering a pelletizer. Use of such systems can be costly and inefficient with regards to time, energy, and available space.

In addition, mixing gum base ingredients within known continuous extruders creates elevated temperature conditions (again, upwards 180 degrees Celsius) that are unsuitable for addition of temperature sensitive, non-base or "subsequent" ingredients such as sweeteners, which can be degraded under such conditions. As such, separate heat exchange systems must again be relied upon in order to sufficiently cool a gum base to a temperature acceptable for additional processing steps, such as mixing of the base with subsequent ingredients. As mentioned above, use of such heat exchange systems can be costly and inefficient with regards to time, energy, and available space.

Accordingly, a continuous extruder capable of efficiently reducing post-masticated gum base temperature to a point where non-base ingredients could be added and pelletization could occur without employing a separate heat exchange system would be desirable.

### SUMMARY

Disclosed is a method for manufacturing chewing gum, the method including feeding one or more gum ingredients including at least an elastomer into a continuous extruder including a plurality of screws, rotating the plurality of screws and mixing the one or more ingredients via the rotating of the plurality of screws within the continuous extruder, forming a partial chewing gum base via the mixing of the one or more ingredients, creating a flow of the partial chewing gum base including the one or more ingredients through the continuous extruder towards a downstream extent of the plurality of screws via the rotating, and conveying the flow of the partial chewing gum base to a region of the continuous extruder that is proximate the downstream extent of the plurality of screws, wherein the flow includes a temperature of less than 90 degrees Celsius when the flow reaches the downstream extent of the plurality of screws.

Also disclosed is a method for manufacturing chewing gum, the method including feeding a plurality of gum ingredients including at least an elastomer into a continuous extruder including a plurality of screws, rotating the plurality of screws and mixing the plurality of ingredients via the rotating of the plurality screws within the continuous extruder, forming a finished chewing gum base via the mixing of the plurality of ingredients, creating a flow of the finished chewing gum base including the plurality of ingredients through the continuous extruder towards a downstream extent of the plurality of screws via the rotating, and conveying the flow of the finished chewing gum base to a region of the continuous extruder that is proximate the downstream extent of the plurality of screws, wherein the flow includes a temperature of less than 90 degrees Celsius when the flow reaches the downstream extent of the plurality of screws.

Additionally disclosed is a method for manufacturing chewing gum, the method including feeding one or more gum ingredients including at least an elastomer into a continuous extruder including a plurality of screws, rotating the plurality of screws and mixing the one or more ingredients via the rotating of the plurality screws within the continuous extruder, forming a partial chewing gum base via the mixing of the one or more ingredients, creating a flow of the partial chewing gum base including the one or more ingredients through the continuous extruder towards a downstream extent of the plurality of screws via the rotating, conveying the flow of the partial chewing gum base to a region of the continuous extruder that is proximate the downstream extent of the plurality of screws, wherein the flow of the partial chewing gum includes a first temperature when the flow reaches the region that is proximate the downstream extent of the plurality of screws, transporting the flow of the partial chewing gum base from the downstream extent of the plurality of screws to a downstream processing device, the flow of the partial chewing gum base reaching the downstream processing device at a second temperature, and wherein the second temperature of the flow is within 20 degrees Celsius of the first temperature of the flow upon reaching of the downstream processing device.

Further disclosed is a method for manufacturing chewing gum, the method including feeding a plurality of gum ingredients including at least an elastomer into a continuous extruder including a plurality of screws, rotating the plurality of screws and mixing the plurality of ingredients via the rotating of the plurality screws within the continuous extruder, forming a finished chewing gum base via the mixing of the plurality of ingredients, creating a flow of the finished chewing gum base including the plurality ingredients through the continuous extruder towards a downstream extent of the plurality of screws via the rotating, conveying the flow of the finished chewing gum base to a region of the continuous extruder that is proximate the downstream extent of the plurality of screws, wherein the flow of the finished chewing gum includes a first temperature when the flow reaches the region that is proximate the downstream extent of the plurality of screws, transporting the flow of the finished chewing gum base from the downstream extent of the plurality of screws to a downstream processing device, the flow of the finished chewing gum base reaching the downstream processing device at a second temperature, and wherein the second temperature of the flow is within 20 degrees Celsius of the first temperature of the flow upon the reaching of the downstream processing device.

Still further disclosed is a system for manufacturing chewing gum, the system including a gum ingredient source including at least elastomer, a continuous extruder configured to receive the elastomer from the gum ingredient source, the continuous extruder including at least three screws, the continuous extruder and the at least three screws being configured to mix and convey a flow of partial chewing gum base including at least the elastomer to a region of the continuous extruder that is proximate a downstream extent of the at least three screws, wherein the continuous extruder is configured to convey the flow of the partial chewing gum base to the region of the continuous extruder such that the flow arrives at the region at a temperature of less than 90 degrees C.

Also disclosed is a system for manufacturing chewing gum, the system including a gum ingredient source including at least elastomer, a continuous extruder configured to receive the elastomer from the gum ingredient source, the continuous extruder including at least three screws, the continuous extruder and the at least three screws being configured to mix and convey a flow of finished chewing gum base including at least the elastomer to a region of the continuous extruder that is proximate a downstream extent of the at least three screws, wherein the continuous extruder is configured to convey the flow of the finished chewing gum base to the region of the continuous extruder such that the flow arrives at the region at a temperature of less than 90 degrees C.

Additionally disclosed is a system for manufacturing chewing gum, the system including a gum ingredient source including at least elastomer, a continuous extruder configured to receive the elastomer from the gum ingredient source, the continuous extruder including at least three screws, the continuous extruder and the at least three screws being configured to mix and convey a flow of partial chewing gum base including at least the elastomer to a region of the continuous extruder that is proximate a downstream extent of the at least three screws, a means for transporting the flow of the partial chewing gum base from the region of the continuous extruder to a downstream processing device, the downstream processing device being configured to process the flow of the partial chewing gum base in a desirable manner, wherein the continuous extruder is configured such that the flow of the partial chewing gum base is conveyed from the region of the continuous extruder at a first temperature and arrives at the downstream processing device at a second temperature, the second temperature being maintained within 20 degrees of the first temperature during transportation of the flow of the partial chewing gum base from the region of the continuous extruder to the downstream processing device.

Further disclosed is a system for manufacturing chewing gum, the system including a gum ingredient source including at least elastomer, a continuous extruder configured to receive the elastomer from the gum ingredient source, the continuous extruder including at least three screws, the continuous extruder and the at least three screws being configured to mix and convey a flow of finished chewing gum base including at least the elastomer to a region of the continuous extruder that is proximate a downstream extent of the at least three screws, a means for transporting the flow of the finished chewing gum base from the region of the continuous extruder to a downstream processing device, the downstream processing device being configured to process the flow of the finished chewing gum base in a desirable manner, wherein the continuous extruder is configured such that the flow of the finished chewing gum base is conveyed from the region of the continuous extruder at a first temperature and arrives at the downstream processing device at a second temperature, the second temperature being maintained within 20 degrees of the first temperature during transportation of the flow of the finished chewing gum base from the region of the continuous extruder to the downstream processing device.

Still further disclosed is a method for manufacturing chewing gum, the method including providing a planetary roller extruder with at least a first barrel section and a second barrel section, feeding at least an elastomer into the planetary roller extruder, masticating the elastomer in the first barrel section, and transporting the elastomer to the second barrel section, feeding at least one additional ingredient into the second barrel section, and mixing the elastomer and the at least one additional ingredient in the second barrel section.

Also disclosed is a method for manufacturing gum, the method including providing a planetary roller extruder including a cylinder with an inner cylinder wall and a central shaft with an outer shaft surface, the inner cylinder wall and the central shaft delimiting a mixing annulus, providing a plurality of planetary screws within the mixing annulus, feeding one or more gum ingredients including at least an elastomer into the planetary roller extruder, rotating the plurality of screws and mixing the one or more ingredients via the rotating of the plurality screws within the planetary roller extruder, masticating the elastomer via the mixing, forming a partial chewing gum base via the mixing and the masticating, creating a flow of the partial chewing gum base including the one or more ingredients through the planetary roller extruder towards a downstream extent of the plurality of screws via the rotating, controlling a temperature of the outer shaft surface via a temperature control system within the central shaft, controlling a temperature of the inner cylinder wall via a temperature control system within the barrel, and controlling temperature of the flow of the partial chewing gum base via contact between the flow of the partial chewing gum base and the cylinder wall and contact between the flow of the partial chewing gum base and the outer shaft surface.

Additionally disclosed is a method for manufacturing gum, the method including providing a planetary roller extruder including a cylinder with an inner cylinder wall and a central shaft with an outer shaft surface, the inner cylinder wall and the central shaft delimiting a mixing annulus, providing a plurality of planetary screws within the mixing annulus, feeding a plurality of gum ingredients including at least an elastomer into the planetary roller extruder, rotating the plurality of screws and mixing the plurality of ingredients via the rotating of the plurality screws within the planetary roller extruder, masticating at least the elastomer via the mixing, forming a finished chewing gum base via the mixing and the masticating, creating a flow of the finished chewing gum base including the plurality of ingredients through the planetary roller extruder towards a downstream extent of the plurality of screws via the rotating, controlling a temperature of the outer shaft surface via a temperature control system within the central shaft, controlling a temperature of the inner cylinder wall via a temperature control system within the barrel, and controlling temperature of the flow of the finished chewing gum base via contact between the flow of finished partial chewing gum base and the cylinder wall and contact between the flow of the finished chewing gum base and the outer shaft surface.

Further disclosed is a method for manufacturing chewing gum, the method including providing a planetary roller extruder including a cylinder with an inner cylinder wall and a central shaft with an outer shaft surface, the inner cylinder wall and the central shaft delimiting a mixing annulus, providing a plurality of planetary screws within the mixing annulus, feeding a plurality of gum ingredients including at least an elastomer into the planetary roller extruder, rotating the plurality of screws and mixing the one or more ingredients via the rotating of the plurality screws within the planetary roller extruder, masticating the plurality of ingredients within the flow via the mixing, forming a finished chewing gum base via the mixing and the masticating of the plurality of ingredients, creating a flow of the finished chewing gum base including the plurality of ingredients through the planetary roller extruder towards a downstream extent of the plurality of screws via the rotating, controlling a temperature of the outer shaft surface via a temperature control system within the central shaft, controlling a temperature of the inner cylinder wall via a temperature control system within the barrel, feeding at least one subsequent gum ingredient into the planetary roller extruder downstream of the masticating, mixing the finished chewing gum base with the at least one subsequent ingredient via within the mixing annulus to form a finished chewing gum, and extruding the finished chewing gum.

Still further disclosed is a method for manufacturing chewing gum, the method including providing a planetary roller extruder including a cylinder with an inner cylinder wall and a central shaft with an outer shaft surface, the inner cylinder wall and the central shaft delimiting a mixing annulus, providing a plurality of planetary screws within the mixing annulus, feeding gum ingredients including at least a fully masticated elastomer into the planetary roller extruder, rotating the plurality of screws and mixing the gum ingredients within the planetary roller extruder, creating a flow of the gum ingredients through the planetary roller extruder towards a downstream extent of the plurality of screws via the rotating, controlling a temperature of the outer shaft surface via a temperature control system within the central shaft, controlling a temperature of the inner cylinder wall via a temperature control system within the barrel, feeding at least one subsequent gum ingredient into the planetary roller extruder, mixing the gum ingredients with the at least one subsequent ingredient via within the mixing annulus to form a finished chewing gum, and extruding the finished chewing gum.

### BRIEF DESCRIPTION OF THE FIGURES

The accompanying drawings incorporated in and forming a part of the specification embodies several aspects of the present invention and, together with the description, serve to explain the principles of the invention. In the drawings:
Figure 1 is a schematic elevation view of a planetary roller extruder in accordance with an exemplary embodiment;
Figure 2 is a partial perspective view of a planetary roller extruder such as that shown in Figure 1;
Figure 3 is a front elevation view of a planetary roller extruder such as that shown in Figure 1;
Figure 4 is a block diagram illustrating an exemplary method for manufacturing gum;
Figure 5 is a schematic representation illustrating an exemplary system for manufacturing gum;
Figure 6 is a block diagram illustrating an exemplary method for manufacturing gum;
Figure 7 is a schematic representation illustrating an exemplary system for manufacturing gum;
Figure 8 is a block diagram illustrating an exemplary method for manufacturing gum;
Figure 9 is a schematic representation illustrating an exemplary system for manufacturing gum;
Figure 10 is a block diagram illustrating an exemplary method for manufacturing gum; and
Figure 11 is a schematic representation illustrating an exemplary system for manufacturing gum.

### DETAILED DESCRIPTION

The following disclosure will detail particular embodiments according to the present invention, which provides methods and systems for manufacturing chewing gum.

As used herein, a product referred to as "chewing gum" or "gum" includes, but is not limited to, compositions ranging from and inclusive of compounded elastomer to finished gum, which may include compounded elastomer in addition to some compounding aids, master batch gum base, compounded elastomer in addition to some subsequent gum ingredients, compounded elastomer in addition to some gum base ingredients and some subsequent gum ingredients, gum base, gum base in addition to some subsequent gum ingredients, master batch finished gum, and finished gum.

Before explaining the various systems and methods according to the present invention, it is helpful to discuss the general composition of several typical stages of chewing gum manufacture that are or may be included in forming the most complex and finished chewing gum product, namely finished gum, which can be made using embodiments of the systems and methods discussed below.

A "finished chewing gum" or "finished gum," as used herein, will refer to chewing gum that is generally ready for preparation to distribute the product to the consumer. As such, a finished gum may still require temperature conditioning, forming, shaping, packaging and coating. However, from a compositional standpoint, the chewing gum itself is generally finished. Not all finished gums have the same ingredients or the same amounts of individual ingredients. By varying the ingredients and amounts of ingredients, textures, flavor and sensations, among other things, can be varied to provide differing characteristics to meet the needs of users.

As is generally well known, a finished gum typically includes a water soluble bulk portion, a water insoluble gum base portion, and one or more flavoring agents. The water soluble portion dissipates over a period of time during chewing. The gum base portion is retained in the mouth throughout the chewing process. A finished gum is to be defined as a chewing gum that is ready for user consumption.

A "finished chewing gum base" or "finished gum base", as used herein, will refer to chewing gum that includes a sufficient combination of gum base ingredients that need only be combined with subsequent gum ingredients to form a finished gum. A finished gum base is a visco-elastic material that includes at least a viscous component, an elastic component, and a softener component. For example, a typical gum base may include elastomer, at least some of the filler, resin and/or plasticizer, polyvinyl acetate, and a softener (such as an oil, fat or wax). Merely compounded elastomer without the addition of any softener, for example, would not be a finished gum base because it would not be considered useable in a finished gum structure because of its difficulty, if not impossibility, to chew.

A "partial chewing gum base" or "partial gum base", as used herein, will refer to chewing gum that includes a gum base ingredient or combination of gum base ingredients that need be combined with further gum base ingredients and subsequent, non-base gum ingredients to form a finished gum. A partial gum base includes at least an elastic component, and will require addition of at least a viscous and/or softener component to form a finished gum base.

### Ingredients

Chewing gum may include a vast number of ingredients in various categories. The systems and methods discussed below may be used to mix any and all known ingredients including, but not limited to, ingredients in the following ingredient categories: elastomers, bulking agents, elastomer plasticizers (which includes resins), elastomer solvents, plasticizers, fats, waxes, fillers, antioxidants, sweeteners (e.g. bulk sweeteners and high intensity sweeteners), syrups/fluids, flavors, sensates, potentiators, acids, emulsifiers, colors, and functional ingredients.

The insoluble gum base in its finished gum base form generally includes ingredients falling under the following categories: elastomers, elastomer plasticizers (resins or solvents), plasticizers, fats, oils, waxes, softeners and fillers. Further discussion of representative ingredients within each category will be provided later on. The gum base may constitute between 5-95% by weight of a finished gum, more typically 10-50% by weight of the finished gum, and most commonly 20-30% by weight of the finished gum.

The water soluble portion of finished gum will be referred to as subsequent ingredients in this disclosure (as they are added subsequent to manufacture of a) finished gum base, and may include subsequent gum ingredients falling under the following categories: softeners, bulk sweeteners, high intensity sweeteners, flavoring agents, acids, additional fillers, functional ingredients and combinations thereof. Softeners are added to the gum in order to optimize the chewability and mouth feel of the gum. The softeners, which are also known as plasticizers, plasticizing agents or emulsifiers, generally constitute between about 0.5-15% by weight of the finished gum. Bulk sweeteners constitute between 5-95% by weight of the finished gum, more typically 20-80% by weight of the finished gum and most commonly 30-60% by weight of the finished gum. High intensity sweeteners may also be present and are commonly used with sugarless sweeteners. When used, high intensity sweeteners typically constitute between 0.001-5% by weight of the finished gum, preferably between 0.01-3% by weight of the finished gum. Typically, high intensity sweeteners are at least 20 times sweeter than sucrose.

Flavor should generally be present in the gum in an amount within the range of about 0.1-15% by weight of the finished gum, preferably between about 0.2-5% by weight of the finished gum, most preferably between about 0.5-3% by weight of the finished gum. Natural and artificial flavoring agents may be used and combined in any sensorially acceptable fashion.

When included, acids typically constitute between about 0.001-5% by weight of the finished gum.

Optional ingredients such as colors, functional ingredients and additional flavoring agents may also be included in gum.

Now that a more general overview has been provided as to general common ingredients, more details about individual categories of ingredients and examples of specific ingredients with in various categories will be provided below.

### Elastomers

The elastomers (rubbers) employed in gum will vary greatly depending upon various factors such as the desirable gum type, desirable gum consistency, and the other desirable gum components to be used in the gum. The elastomer may be any water-insoluble polymer known in the art, and includes those polymers utilized for chewing gums and bubble gums. Illustrative examples of suitable polymers in gum structures, and particularly gum bases, include both natural and synthetic elastomers. For example, those polymers which are suitable in chewing gum include, without limitation, natural substances (of vegetable origin) such as caspi, chicle, natural rubber, crown gum, nispero, rosidinha, jelutong, guayule, perillo, niger gutta, tunu, balata, guttapercha, lechi capsi, sorva, gutta kay, and the like, and combinations thereof. Examples of synthetic elastomers include, without limitation, styrene-butadiene copolymers (SBR), polyisobutylene, isobutylene-isoprene copolymers, polyethylene, polyvinyl acetate and the like, and combinations thereof. Elastomers constitute between about 10% to about 60% by weight and more commonly between about 35-40% by weight of the finished gum.

Additional useful polymers include: crosslinked polyvinyl pyrrolidone, polymethylmethacrylate; copolymers of lactic acid, polyhydroxyalkanoates, plasticized ethylcellulose, polyvinyl acetatephthalate and combinations thereof.

### Elastomer Plasticizers

Chewing gum may additionally contain elastomer solvents, also referred to herein as elastomer plasticizers, to aid in softening the elastomeric materials. Such elastomer solvents may include those elastomer solvents known in the art, for example, terpinene resins such as polymers of alpha-pinene, beta-pinene or d-limonene, methyl, glycerol and pentaerythritol esters of rosins and modified rosins and gums such as hydrogenated, dimerized and polymerized rosins, and mixtures thereof. Examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum in amounts from about 2% to about 15%, and preferably from about 7% to about 11%, by weight of the finished gum.

### Plasticizers

Chewing gum may also include plasticizers or softeners, which also fall under the Wax category described below, to provide a variety of desirable textures and consistency properties. Because of the low molecular weight of these ingredients, the plasticizers and softeners are able to penetrate the fundamental structure of the gum making it plastic and less viscous. Useful plasticizers and softeners include triacetin, medium chain triglycerides of non-hydrogenated, partially hydrogenated cotton seed oil, soybean oil, palm oil, palm kernel oil, coconut oil, safflower oil, tallow oil, cocoa butter, terepene resins derived from alpha-pinene, lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, sorbitan monostearate, tallow, propylene glycol, mixtures thereof, and the like, may also be incorporated into chewing gum. The plasticizers and softeners are generally employed in gum in amounts up to about 20% by weight of the finished gum, and more specifically in amounts from about 9% to about 17%, by weight of the finished gum.

Plasticizers may also include hydrogenated vegetable oils, soybean oil and cottonseed oil which may be employed alone or in combination. These plasticizers provide chewing gum with good texture and soft chew characteristics. These plasticizers and softeners are generally employed in amounts from about 5% to about 14%, and more specifically in amounts from about 5% to about 13.5%, by weight of the finished gum.

### Fats

Suitable oils and fats include partially hydrogenated vegetable or animal fats, such as coconut oil, palm kernel oil, beef tallow, and lard, among others. These ingredients when used are generally present in amounts up to about 7%, and preferably up to about 3.5%, by weight of the finished gum.

### Waxes

In some embodiments, chewing gum may include wax. Waxes that are used may include synthetic waxes such as waxes containing branched alkanes and copolymerized with monomers such as, but not limited to, polypropylene and polyethylene and Fischer-Tropsch type waxes, petroleum waxes such as paraffin, and microcrystalline wax, and natural waxes such as beeswax, candellia, carnauba, and polyethylene wax, rice bran and petroleum.

Waxes soften the polymeric mixture and improves the elasticity of the gum. When present, the waxes employed will have a melting point below about 60° C., and preferably between about 45° C. and about 55° C. The low melting wax may be a paraffin wax. The wax may be present in a finished gum in an amount from about 6% to about 10%, and preferably from about 7% to about 9.5%, by weight of the finished gum.

In addition to the low melting point waxes, waxes having a higher melting point may be used in the finished gum in amounts up to about 5%, by weight of the finished gum. Such high melting waxes include beeswax, vegetable wax, candelilla wax, carnuba wax, most petroleum waxes, and the like, and mixtures thereof.

### Fillers

In some embodiments, chewing gum that is formed using the systems and methods discussed below may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, clay, titanium oxide, ground limestone, monocalcium phosphate, tricalcium phosphate, dicalcium phosphate, calcium sulfate and the like, and mixtures thereof. These fillers or adjuvants may be used in various amounts in chewing gum. The amount of filler, may be present in an amount from about zero to about 40%, and more specifically from about zero to about 30%, by weight of the finished gum. In some embodiments, the amount of filler will be from about zero to about 15%, more specifically from about 3% to about 11%.

### Antioxidants

Antioxidants can include materials that scavenge free radicals. In some embodiments, antioxidants can include but are not limited to ascorbic acid, citric acid (citric acid may be encapsulated), rosemary oil, vitamin A, vitamin E, vitamin E phosphate, butylated hydroxytoluene (BHT), butylated hydroxyanisole (BHA), propyl gallate, tocopherols, di-alpha-tocopheryl phosphate, tocotrienols, alpha lipoic acid, dihydrolipoic acid, xanthophylls, beta cryptoxanthin, lycopene, lutein, zeaxanthin, astaxanthin, beta-carotene, carotenes, mixed carotenoids, polyphenols, flavonoids, and combinations thereof.

### Subsequent Ingredients

In order to produce a finished gum, chewing gum may also include amounts of conventional additives selected from the group consisting of sweetening agents (bulk and high intensity sweeteners), softeners, emulsifiers, fillers, bulking agents (carriers, extenders, bulk sweeteners), flavoring agents (flavors, flavorings), coloring agents (colorants, colorings), functional ingredients, and the like, and mixtures thereof. Some of these additives may serve more than one purpose. For example, in sugarless gum structure, a sweetener, such as maltitol or other sugar alcohol, may also function as a bulking agent and particularly a water soluble bulking agent.

### Bulk Sweeteners

Suitable Bulk Sweeteners include monosaccharides, disaccharides and polysaccharides such as xylose, ribulose, glucose (dextrose), lactose, mannose, galactose, fructose (levulose), sucrose (sugar), maltose, invert sugar, partially hydrolyzed starch and corn syrup solids, sugar alcohols, randomly bonded glucose polymers such as those polymers distributed under the tradename Litesse™ which is the brand name for polydextrose and is manufactured by Danisco Sweeteners, Ltd. of 41-51 Brighton Road, Redhill, Surryey, RH16YS, United Kingdom.; isomalt (a racemic mixture of alpha-D-glucopyranosyl-1,6-mannitol and alpha-D-glucopyranosyl-1,6-sorbitol manufactured under the tradename PALATINIT™ by Palatinit Sussungsmittel GmbH of Gotlieb-Daimler-Strause 12 a, 68165 Mannheim, Germany); maltodextrins; hydrogenated starch hydrolysates; hydrogenated hexoses; hydrogenated disaccharides; minerals, such as calcium carbonate, talc, titanium dioxide, dicalcium phosphate; celluloses; and mixtures thereof.

Suitable sugarless bulk sweeteners include sorbitol, xylitol, mannitol, galactitol, lactitol, maltitol, erythritol, isomalt and mixtures thereof. Suitable hydrogenated starch hydrolysates include those disclosed in U.S. Pat. No. 4,279,931 and various hydrogenated glucose syrups and/or powders which contain sorbitol, maltitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN®, a commercially available product manufactured by Roquette Freres of France, and HYSTAR®, a commercially available product manufactured by SPI Polyols, Inc. of New Castle, Del., are also useful.

In some embodiments, chewing gum may include a specific polyol composition including at least one polyol which is from about 30% to about 80% by weight of the finished gum, and specifically from 50% to about 60%. In some embodiments, chewing gummay have low hygroscopicity. The polyol composition may include any polyol known in the art including, but not limited to maltitol, sorbitol, erythritol, xylitol, mannitol, isomalt, lactitol and combinations thereof. Lycasin™ which is a hydrogenated starch hydrolysate including sorbitol and maltitol, may also be used.

The amount of the polyol or combination of polyols used in chewing gum will depend on many factors including the type of elastomers used in the gum or gum base and the particular polyols used. For example, wherein the total amount of the polyol composition is in the range of about 40% to about 65% based on the weight of the finished gum, the amount of isomalt may be from about 40% to about 60% in addition to an amount of sorbitol from about 0 up to about 10%, more specifically, an amount of isomalt may be from about 45% to about 55% in combination with sorbitol from about 5% to about 10% based on the weight of the finished gum.

The polyol composition which may include one or more different polyols which may be derived from a genetically modified organism ("GMO") or GMO free source. For example, the maltitol may be GMO free maltitol or provided by a hydrogenated starch hydrolysate. The term "GMO-free" should be defined as referring to a composition that has been derived from process in which genetically modified organisms are not utilized.

The sweetening agents which may be included in some chewing gum manufactured using the below systems and methods may be any of a variety of sweeteners known in the art and may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

### High Intensity Sweeteners

Desirably, the sweetener is a high intensity sweetener such as aspartame, neotame, sucralose, monatin, and acesulfame potassium (Ace-K). The high intensity sweetener can be in an encapsulated form, a free form, or both.

In general, an effective amount of sweetener may be utilized to provide the level of sweetness desired, and this amount may vary with the sweetener selected. In some embodiments the amount of sweetener may be present in amounts from about 0.001% to about 3%, by weight of the finished gum, depending upon the sweetener or combination of sweeteners used. The exact range of amounts for each type of sweetener may be selected by those skilled in the art.

The sweeteners involved may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Without being limited to particular sweeteners, representative categories and examples include:
(a) water-soluble sweetening agents such as dihydrochalcones, monellin, steviosides, lo han quo, lo han quo derivatives, glycyrrhizin, dihydroflavenol, and sugar alcohols such as sorbitol, mannitol, maltitol, xylitol, erythritol, and L-aminodicarboxylic acid aminoalkenoic acid ester amides, such as those disclosed in U.S. Pat. No. 4,619,834, which disclosure is incorporated herein by reference, and mixtures thereof,
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1 ,2,3-oxathiazine-4-one-2,2-dioxide (Acesulfame-K), the free acid form of saccharin, and mixtures thereof,
(c) dipeptide based sweeteners, such as L-aspartic acid derived sweeteners, such as L-aspartyl-L-phenylalanine methyl ester (Aspartame), N-[N-(3,3-dimethylbutyl)-L-α-aspartyl]-L-phenylalanine 1-methyl ester (Neotame), and materials described in U.S. Pat. No. 3,492,131, L-alphaaspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanos ide, or 4,1'-dichloro-4,1'-dideoxygalactosucrose; 1',6'-dichloro 1',6'-dideoxysucrose; 4-chloro-4-deoxy-alpha-D-galactopyranosyl-1,6-dichloro-1,6-dideoxy-beta-D-fructo furanoside, or 4,1',6'-trichloro-4,1',6'-trideoxygalactosucrose; 4,6-dichloro-4,6-dideoxy-alpha-D-galactopyranosyl-6-chloro-6-deoxy-beta-D-fructo furanoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideoxy-beta -D-fructofuranoside, or 4,6,1',6'-tetrachloro4,6,1',6'-tetradeoxygalacto-sucrose ; and 4,6,1',6'-tetradeoxy-sucrose, and mixtures thereof;
(e) protein based sweeteners such as thaumaoccous danielli (Thaumatin I and II) and talin; and
(f) the sweetener monatin (2-hydroxy-2-(indol-3-ylmethyl)-4-aminoglutaric acid) and its derivatives.

The intense sweetening agents may be used in many distinct physical forms well-known in the art to provide an initial burst of sweetness and/or a prolonged sensation of sweetness. Without being limited thereto, such physical forms include free forms, spray dried forms, powdered forms, beaded forms, encapsulated forms, and mixtures thereof. In one embodiment, the sweetener is a high intensity sweetener such as aspartame, sucralose, and acesulfame potassium (e.g., Ace-K or acesulfame-K). Several representative forms of encapsulated sweeteners and methods of encapsulating sweeteners are illustrated in U.S. Pat. Nos. 7,244,454; 7,022,352; 6,759,066; 5,217,735 ;5,192,561; 5,164,210; 4,997,659 and 4,981,698 as well as U.S. Patent Application Publication Nos. 2007/0231424; 2004/0096544; 2005/0112236; and 2005/0220867, the teachings and disclosure of which are hereby incorporated in their entireties by reference thereto.

The active component (e.g., sweetener), which is part of the delivery system, may be used in amounts necessary to impart the desired effect associated with use of the active component (e.g., sweetness). In general, an effective amount of intense sweetener may be utilized to provide the level of sweetness desired, and this amount may vary with the sweetener selected. The intense sweetener may be present in amounts from about 0.001% to about 3%, by weight of the composition, depending upon the sweetener or combination of sweeteners used. The exact range of amounts for each type of sweetener may be selected by those skilled in the art.

### Syrups

Anhydrous glycerin may also be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the gum structure. Other syrups may include corn syrup and maltitol syrup.

### Flavorants

In some embodiments, flavorants may include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof Nonlimiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, pineapple, apricot, banana, melon, apricot, ume, cherry, raspberry, blackberry, tropical fruit, mango, mangosteen, pomegranate, papaya and so forth. Other potential flavors whose release profiles can be managed include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a camomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with the cooling agents, described herein below. In some embodiments, flavorants may chose from geraniol, linalool, nerol, nerolidal, citronellol, heliotropine, methyl cyclopentelone, ethyl vanillin, maltol, ethyl maltol, furaneol, alliaceous compounds, rose type compounds such as phenethanol, phenylacetic acid, nerol, linalyl esters, jasmine, sandlewood, patchouli, and/or cedarwood.

In some embodiments, other flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used. This publication is incorporated herein by reference. These may include natural as well as synthetic flavors.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, .e., melonal (melon), 2,6-dimethyloctanal (green fruit), and 2-dodecenal (citrus, mandarin), cherry, grape, blueberry, blackberry, strawberry shortcake, and mixtures thereof.

In some embodiments, flavoring agents are used at levels that provide a perceptible sensory experience i.e. at or above their threshold levels. In other embodiments, flavoring agents are used at levels below their threshold levels such that they do not provide an independent perceptible sensory experience. At subthreshold levels, the flavoring agents may provide an ancillary benefit such as flavor enhancement or potentiation.

In some embodiments, a flavoring agent may be employed in either liquid form and/or dried form. When employed in the latter form, suitable drying means such as spray drying the liquid may be used. Alternatively, the flavoring agent may be absorbed onto water soluble materials, such as cellulose, starch, sugar, maltodextrin, gum arabic and so forth or may be encapsulated. In still other embodiments, the flavoring agent may be adsorbed onto silicas, zeolites, and the like.

In some embodiments, the flavoring agents may be used in many distinct physical forms. Without being limited thereto, such physical forms include free forms, such as spray dried, powdered, beaded forms, encapsulated forms, and mixtures thereof.

Illustrations of the encapsulation of flavors as well as other additional components can be found in the examples provided herein. Typically, encapsulation of a component will result in a delay in the release of the predominant amount of the component during consumption of a gum structure that includes the encapsulated component (e.g., as part of a delivery system added as an ingredient to the gum). In some embodiments, the release profile of the ingredient (e.g., the flavor, sweetener, etc.) can be managed by managing various characteristics of the ingredient, delivery system containing the ingredient, and/or the gum structure containing the delivery system and/or how the delivery system is made. For example, characteristics might include one or more of the following: tensile strength of the delivery system, water solubility of the ingredient, water solubility of the encapsulating material, water solubility of the delivery system, ratio of ingredient to encapsulating material in the delivery system, average or maximum particle size of ingredient, average or maximum particle size of ground delivery system, the amount of the ingredient or the delivery system in the gum, ratio of different polymers used to encapsulate one or more ingredients, hydrophobicity of one or more polymers used to encapsulate one or more ingredients, hydrophobicity of the delivery system, the type or amount of coating on the delivery system, the type or amount of coating on an ingredient prior to the ingredient being encapsulated, etc.

### Sensate Ingredients

Sensate compounds can include cooling agents, warming agents, tingling agents, effervescent agents, and combinations thereof. A variety of well known cooling agents may be employed. For example, among the useful cooling agents are included xylitol, erythritol, dextrose, sorbitol, menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-p-menthane-3-carboxamide (WS-3), isopulegol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, hereinafter "isopregol"); menthone glycerol ketals (FEMA 3807, tradename FRESCOLAT® type MGA); 3-1-menthoxypropane-1,2-diol (from Takasago, FEMA 3784); and menthyl lactate; (from Haarman & Reimer, FEMA 3748, tradename FRESCOLATO type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; and Menthol methyl ether, and menthyl pyrrolidone carboxylate among others. These and other suitable cooling agents are further described in the following U.S. patents, all of which are incorporated in their entirety by reference hereto: U.S. Pat. Nos. 4,230,688; 4,032,661; 4,459,425; 4,136,163; 5,266,592; 6,627,233.

In some embodiments, warming components may be selected from a wide variety of compounds known to provide the sensory signal of warming to the user. These compounds offer the perceived sensation of warmth, particularly in the oral cavity, and often enhance the perception of flavors, sweeteners and other organoleptic components. In some embodiments, useful warming compounds can include vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamyleather, vanillyl alcohol n-hexyleather, vanillyl alcohol methylether, vanillyl alcohol ethylether, gingerol, shogaol, paradol, zingerone, capsaicin, dihydrocapsaicin, nordihydrocapsaicin, homocapsaicin, homodihydrocapsaicin, ethanol, isopropyl alcohol, iso-amylalcohol, benzyl alcohol, glycerine, and combinations thereof.

In some embodiments, a tingling sensation can be provided. One such tingling sensation is provided by adding jambu, oleoresin, or spilanthol to some examples. In some embodiments, alkylamides extracted from materials such as jambu or sanshool can be included. Additionally, in some embodiments, a sensation is created due to effervescence. Such effervescence is created by combining an alkaline material with an acidic material. In some embodiments, an alkaline material can include alkali metal carbonates, alkali metal bicarbonates, alkaline earth metal carbonates, alkaline earth metal bicarbonates and mixtures thereof. In some embodiments, an acidic material can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. Examples of "tingling" type sensates can be found in U.S. Pat. No. 6,780,443, the entire contents of which are incorporated herein by reference for all purposes.

Sensate components may also be referred to as "trigeminal stimulants" such as those disclosed in U.S. Patent Application No. 205/0202118, which is incorporated herein by reference. Trigeminal stimulants are defined as an orally consumed product or agent that stimulates the trigeminal nerve. Examples of cooling agents which are trigeminal stimulants include menthol, WS-3, N-substituted p-menthane carboxamide, acyclic carboxamides including WS-23, methyl succinate, menthone glycerol ketals, bulk sweeteners such as xylitol, erythritol, dextrose, and sorbitol, and combinations thereof. Trigeminal stimulants can also include flavors, tingling agents, Jambu extract, vanillyl alkyl ethers, such as vanillyl n-butyl ether, spilanthol, Echinacea extract, Northern Prickly Ash extract, capsaicin, capsicum oleoresin, red pepper oleoresin, black pepper oleoresin, piperine, ginger oleoresin, gingerol, shoagol, cinnamon oleoresin, cassia oleoresin, cinnamic aldehyde, eugenol, cyclic acetal of vanillin and menthol glycerin ether, unsaturated amides, and combinations thereof.

In some embodiments, sensate components are used at levels that provide a perceptible sensory experience i.e. at or above their threshold levels. In other embodiments, sensate components are used at levels below their threshold levels such that they do not provide an independent perceptible sensory experience. At subthreshold levels, the sensates may provide an ancillary benefit such as flavor or sweetness enhancement or potentiation.

### Potentiator Ingredients

Potentiators can include of materials that may intensify, supplement, modify or enhance the taste and/or aroma perception of an original material without introducing a characteristic taste and/or aroma perception of their own. In some embodiments, potentiators designed to intensify, supplement, modify, or enhance the perception of flavor, sweetness, tartness, umami, kokumi, saltiness and combinations thereof can be included.

In some embodiments, examples of suitable potentiators, also known as taste potentiators include, but are not limited to, neohesperidin dihydrochalcone, chlorogenic acid, alapyridaine, cynarin, miraculin, glupyridaine, pyridinium-betain compounds, glutamates, such as monosodium glutamate and monopotassium glutamate, neotame, thaumatin, tagatose, trehalose, salts, such as sodium chloride, monoammonium glycyrrhizinate, vanilla extract (in ethyl alcohol), sugar acids, potassium chloride, sodium acid sulfate, hydrolyzed vegetable proteins, hydrolyzed animal proteins, yeast extracts, adenosine monophosphate (AMP), glutathione, nucleotides, such as inosine monophosphate, disodium inosinate, xanthosine monophosphate, guanylate monophosphate, alapyridaine (N-(1-carboxyethyl)-6-(hydroxymethyl)pyridinium-3-ol inner salt, sugar beet extract (alcoholic extract), sugarcane leaf essence (alcoholic extract), curculin, strogin, mabinlin, gymnemic acid, hydroxybenzoic acids, 3-hydrobenzoic acid, 2,4-dihydrobenzoic acid, citrus aurantium, vanilla oleoresin, sugarcane leaf essence, maltol, ethyl maltol, vanillin, licorice glycyrrhizinates, compounds that respond to G-protein coupled receptors (T2Rs and T1Rs) and taste potentiator compositions that impart kokumi, as disclosed in U.S. Pat. No. 5,679,397 to Kuroda et al., which is incorporated in its entirety herein by reference. "Kokumi" refers to materials that impart "mouthfulness" and "good body".

Sweetener potentiators, which are a type of taste potentiator, enhance the taste of sweetness. In some embodiments, exemplary sweetener potentiators include, but are not limited to, monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, sugar beet extract, neotame, thaumatin, neohesperidin dihydrochalcone, hydroxybenzoic acids, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and T1Rs) and combinations thereof.

Additional examples of potentiators for the enhancement of salt taste include acidic peptides, such as those disclosed in U.S. Pat. No. 6,974,597, herein incorporated by reference. Acidic peptides include peptides having a larger number of acidic amino acids, such as aspartic acid and glutamic acid, than basic amino acids, such as lysine, arginine and histidine. The acidic peptides are obtained by peptide synthesis or by subjecting proteins to hydrolysis using endopeptidase, and if necessary, to deamidation. Suitable proteins for use in the production of the acidic peptides or the peptides obtained by subjecting a protein to hydrolysis and deamidation include plant proteins, (e.g. wheat gluten, corn protein (e.g., zein and gluten meal), soybean protein isolate), animal proteins (e.g., milk proteins such as milk casein and milk whey protein, muscle proteins such as meat protein and fish meat protein, egg white protein and collagen), and microbial proteins (e.g., microbial cell protein and polypeptides produced by microorganisms).

The sensation of warming or cooling effects may also be prolonged with the use of a hydrophobic sweetener as described in U.S. Patent Application Publication 2003/0072842 A1 which is incorporated in its entirety herein by reference.

### Food Acid Ingredients

Acids can include, but are not limited to acetic acid, adipic acid, ascorbic acid, butyric acid, citric acid, formic acid, fumaric acid, glyconic acid, lactic acid, phosphoric acid, malic acid, oxalic acid, succinic acid, tartaric acid, aspartic acid, benzoic acid, caffeotannic acid, iso-citric acid, citramalic acid, galacturonic acid, glucuronic acid, glyceric acid, glycolic acid, ketoglutaric acid, α-ketoglutaric acid, lactoisocitric acid, oxalacetic acid, pyruvic acid, quinic acid, shikimic acid, succinic acid, tannic acid, hydroxyacetic acid, suberic acid, sebacic acid, azelaic acid, pimelic acid, capric acid and combinations thereof.

### Emulsifiers

Chewing gum may also include emulsifiers which aid in dispersing the immiscible components into a single stable system. The emulsifiers useful in this invention include glyceryl monostearate, lecithin, fatty acid monoglycerides, diglycerides, propylene glycol monostearate, methyl cellulose, alginates, carrageenan, xanthan gum, gelatin, carob, tragacanth, locust bean gum, pectin, alginates, galactomannans such as guar gum, carob bean gum, glucomannan, gelatin, starch, starch derivatives, dextrins and cellulose derivatives such as carboxy methyl cellulose, acidulants such as malic acid, adipic acid, citric acid, tartaric acid, fumaric acid, and the like, used alone and mixtures thereof. The emulsifier may be employed in amounts from about 2% to about 15%, and more specifically, from about 7% to about 11%, by weight of the gum structure.

### Colors

Coloring agents may be used in amounts effective to produce the desired color. The coloring agents may include pigments which may be incorporated in amounts up to about 6%, by weight of the finished gum. For example, titanium dioxide may be incorporated in amounts up to about 2%, and preferably less than about 1%, by weight of the gum structure. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No. 1 comprises a triphenylmethane dye and is the monosodium salt of 4-[4-(N-ethyl-p-sulfoniumbenzylamino)diphenylmethylene]-[1-(N-ethyl -N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated herein by reference.

As classified by the United States Food, Drug, and Cosmetic Act (21 C.F.R. 73), colors can include exempt from certification colors (sometimes referred to as natural even though they can be synthetically manufactured) and certified colors (sometimes referred to as artificial), or combinations thereof. In some embodiments, exempt from certification or natural colors can include, but are not limited to annatto extract, (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120); carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), and combinations thereof.

In some embodiments, certified colors can include, but are not limited to, FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), and combinations thereof. In some embodiments, certified colors can include FD&C aluminum lakes. These include of the aluminum salts of FD&C dyes extended on an insoluble substrate of alumina hydrate. Additionally, in some embodiments, certified colors can be included as calcium salts.

### Functional Ingredients

Additional additives including functional ingredients include physiological cooling agents, throat-soothing agents, spices, warming agents, tooth-whitening agents or other dental care ingredients, breath-freshening agents, vitamins, nutraceuticals, phytochemicals, polyphenols, antioxidants, active ingredients, minerals, caffeine, drugs and other actives may also be included in the composition of the chewing gum. Such components may be used in amounts sufficient to achieve their intended effects and will be more fully discussed below.

### Breath Freshening Ingredients

Breath fresheners can include essential oils as well as various aldehydes, alcohols, and similar materials. In some embodiments, essential oils can include oils of spearmint, peppermint, wintergreen, sassafras, chlorophyll, citral, geraniol, cardamom, clove, sage, carvacrol, eucalyptus, cardamom, magnolia bark extract, marjoram, cinnamon, lemon, lime, grapefruit, and orange. In some embodiments, aldehydes such as cinnamic aldehyde and salicylaldehyde can be used. Additionally, chemicals such as menthol, carvone, iso-garrigol, and anethole can function as breath fresheners. Of these, the most commonly employed are oils of peppermint, spearmint and chlorophyll.

In addition to essential oils and chemicals derived from them, in some embodiments breath fresheners can include but are not limited to zinc citrate, zinc acetate, zinc fluoride, zinc ammonium sulfate, zinc bromide, zinc iodide, zinc chloride, zinc nitrate, zinc flurosilicate, zinc gluconate, zinc tartarate, zinc succinate, zinc formate, zinc chromate, zinc phenol sulfonate, zinc dithionate, zinc sulfate, silver nitrate, zinc salicylate, zinc glycerophosphate, copper nitrate, chlorophyll, copper chlorophyll, chlorophyllin, hydrogenated cottonseed oil, chlorine dioxide, beta cyclodextrin, zeolite, silica-based materials, carbon-based materials, enzymes such as laccase, and combinations thereof.

In some embodiments, the release profiles of probiotics can be managed for a gum structure including, but not limited to lactic acid producing microorganisms such as Bacillus coagulans, Bacillus subtilis, Bacillus laterosporus, Bacillus laevolacticus, Sporolactobacillus inulinus, Lactobacillus acidophilus, Lactobacillus curvatus, Lactobacillus plantarum, Lactobacillus jenseni, Lactobacillus casei, Lactobacillus fermentum, Lactococcus lactis, Pedioccocus acidilacti, Pedioccocus pentosaceus, Pedioccocus urinae, Leuconostoc mesenteroides, Bacillus coagulans, Bacillus subtilis, Bacillus laterosporus, Bacillus laevolacticus, Sporolactobacillus inulinus and mixtures thereof. Breath fresheners are also known by the following trade names: Retsyn,™ Actizol,™ and Nutrazin.™ Examples of malodor-controlling compositions are also included in U.S. Pat. No. 5,300,305 to Stapler et al. and in U.S. Patent Application Publication Nos. 2003/0215417 and 2004/0081713 which are incorporated in their entirety herein by reference for all purposes.

### Dental Care Ingredients

Dental care ingredients (also known as oral care ingredients) may include but are not limited to tooth whiteners, stain removers, oral cleaning, bleaching agents, desensitizing agents, dental remineralization agents, antibacterial agents, anticaries agents, plaque acid buffering agents, surfactants and anticalculus agents. Non-limiting examples of such ingredients can include, hydrolytic agents including proteolytic enzymes, abrasives such as hydrated silica, calcium carbonate, sodium bicarbonate and alumina, other active stain-removing components such as surface-active agents, including, but not limited to anionic surfactants such as sodium stearate, sodium palminate, sulfated butyl oleate, sodium oleate, salts of fumaric acid, glycerol, hydroxylated lecithin, sodium lauryl sulfate and chelators such as polyphosphates, which are typically employed as tartar control ingredients. In some embodiments, dental care ingredients can also include tetrasodium pyrophosphate and sodium tri-polyphosphate, sodium bicarbonate, sodium acid pyrophosphate, sodium tripolyphosphate, xylitol, sodium hexametaphosphate.

In some embodiments, peroxides such as carbamide peroxide, calcium peroxide, magnesium peroxide, sodium peroxide, hydrogen peroxide, and peroxydiphospate are included. In some embodiments, potassium nitrate and potassium citrate are included. Other examples can include casein glycomacropeptide, calcium casein peptone-calcium phosphate, casein phosphopeptides, casein phosphopeptide-amorphous calcium phosphate (CPP-ACP), and amorphous calcium phosphate. Still other examples can include papaine, krillase, pepsin, trypsin, lysozyme, dextranase, mutanase, glycoamylase, amylase, glucose oxidase, and combinations thereof.

Further examples can include surfactants such as sodium stearate, sodium ricinoleate, and sodium lauryl sulfate surfactants for use in some embodiments to achieve increased prophylactic action and to render the dental care ingredients more cosmetically acceptable. Surfactants can preferably be detersive materials which impart to the composition detersive and foaming properties. Suitable examples of surfactants are water-soluble salts of higher fatty acid monoglyceride monosulfates, such as the sodium salt of the monosulfated monoglyceride of hydgrogenated coconut oil fatty acids, higher alkyl sulfates such as sodium lauryl sulfate, alkyl aryl sulfonates such as sodium dodecyl benzene sulfonate, higher alkyl sulfoacetates, sodium lauryl sulfoacetate, higher fatty acid esters of 1,2-dihydroxy propane sulfonate, and the substantially saturated higher aliphatic acyl amides of lower aliphatic amino carboxylic acid compounds, such as those having 12 to 16 carbons in the fatty acid, alkyl or acyl radicals, and the like. Examples of the last mentioned amides are N-lauroyl sarcosine, and the sodium, potassium, and ethanolamine salts of N-lauroyl, N-myristoyl, or N-palmitoyl sarcosine.

In addition to surfactants, dental care ingredients can include antibacterial agents such as, but not limited to, triclosan, chlorhexidine, zinc citrate, silver nitrate, copper, limonene, and cetyl pyridinium chloride. In some embodiments, additional anticaries agents can include fluoride ions or fluorine-providing components such as inorganic fluoride salts. In some embodiments, soluble alkali metal salts, for example, sodium fluoride, potassium fluoride, sodium fluorosilicate, ammonium fluorosilicate, sodium monofluorophosphate, as well as tin fluorides, such as stannous fluoride and stannous chloride can be included. In some embodiments, a fluorine-containing compound having a beneficial effect on the care and hygiene of the oral cavity, e.g., diminution of enamel solubility in acid and protection of the teeth against decay may also be included as an ingredient. Examples thereof include sodium fluoride, stannous fluoride, potassium fluoride, potassium stannous fluoride (SnF.sub.2-KF), sodium hexafluorostannate, stannous chlorofluoride, sodium fluorozirconate, and sodium monofluorophosphate. In some embodiments, urea is included.

Further examples are included in the following U.S. patents and U.S. published patent applications, the contents of all of which are incorporated in their entirety herein by reference for all purposes: U.S. Pat. No. 5,227,154 to Reynolds, U.S. Pat. No. 5,378,131 to Greenberg, U.S. Pat. No. 6,846,500 to Luo et al., U.S. Pat. No. 6,733,818 to Luo et al., U.S. Pat. No. 6,696,044 to Luo et al., U.S. Pat. No. 6,685,916 to Holme et al., U.S. Pat. No. 6,485,739 to Luo et al., U.S. Pat. No. 6,479,071 to Holme et al., U.S. Pat. No. 6,471,945 to Luo et al., U.S. Patent Publication Nos. 20050025721 to Holme et al., 2005008732 to Gebreselassie et al., and 20040136928 to Holme et al.

### Active Ingredients

Actives generally refer to those ingredients that are included in a delivery system and/or gum for the desired end benefit they provide to the user. In some embodiments, actives can include medicaments, nutrients, nutraceuticals, herbals, nutritional supplements, pharmaceuticals, drugs, and the like and combinations thereof.

Examples of useful drugs include ace-inhibitors, antianginal drugs, anti-arrhythmias, anti-asthmatics, anti-cholesterolemics, analgesics, anesthetics, anti-convulsants, anti-depressants, anti-diabetic agents, anti-diarrhea preparations, antidotes, anti-histamines, anti-hypertensive drugs, anti-inflammatory agents, anti-lipid agents, anti-manics, anti-nauseants, anti-stroke agents, anti-thyroid preparations, anti-tumor drugs, anti-viral agents, acne drugs, alkaloids, amino acid preparations, anti-tussives, anti-uricemic drugs, anti-viral drugs, anabolic preparations, systemic and non-systemic anti-infective agents, antineoplastics, anti-parkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, endometriosis management agents, enzymes, erectile dysfunction therapies such as sildenafil citrate, which is currently marketed as Viagra™, fertility agents, gastrointestinal agents, homeopathic remedies, hormones, hypercalcemia and hypocalcemia management agents, immunomodulators, immunosuppressives, migraine preparations, motion sickness treatments, muscle relaxants, obesity management agents, osteoporosis preparations, oxytocics, parasympatholytics, parasympathomimetics, prostaglandins, psychotherapeutic agents, respiratory agents, sedatives, smoking cessation aids such as bromocryptine or nicotine, sympatholytics, tremor preparations, urinary tract agents, vasodilators, laxatives, antacids, ion exchange resins, anti-pyretics, appetite suppressants, expectorants, anti-anxiety agents, anti-ulcer agents, anti-inflammatory substances, coronary dilators, cerebral dilators, peripheral vasodilators, psycho-tropics, stimulants, anti-hypertensive drugs, vasoconstrictors, migraine treatments, antibiotics, tranquilizers, anti-psychotics, anti-tumor drugs, anti-coagulants, anti-thrombotic drugs, hypnotics, anti-emetics, anti-nauseants, anti-convuisants, neuromuscular drugs, hyper- and hypoglycemic agents, thyroid and anti-thyroid preparations, diuretics, anti-spasmodics, terine relaxants, anti-obesity drugs, erythropoietic drugs, anti-asthmatics, cough suppressants, mucolytics, DNA and genetic modifying drugs, and combinations thereof.

Examples of active ingredients contemplated for use in some embodiments can include antacids, H2-antagonists, and analgesics. For example, antacid dosages can be prepared using the ingredients calcium carbonate alone or in combination with magnesium hydroxide, and/or aluminum hydroxide. Moreover, antacids can be used in combination with H2-antagonists.

Analgesics include opiates and opiate derivatives, such as Oxycontin™, ibuprofen, aspirin, acetaminophen, and combinations thereof that may optionally include caffeine.

Other drug active ingredients for use in embodiments can include anti-diarrheals such as Immodium™ AD, anti-histamines, anti-tussives, decongestants, vitamins, and breath fresheners. Also contemplated for use herein are anxiolytics such as Xanax™; anti-psychotics such as Clozaril™ and Haldol™; non-steroidal anti-inflammatories (NSAID's) such as ibuprofen, naproxen sodium, Voltaren™ and Lodine™, anti-histamines such as Claritin™, Hismanal™, Relafen™, and Tavist™; anti-emetics such as Kytril™ and Cesamet™; bronchodilators such as Bentolin™, Proventil™; anti-depressants such as Prozac™, Zolof™, and Paxil™; anti-migraines such as Imigra™, ACE-inhibitors such as Vasotec™, Capoten™ and Zestril™: anti-Alzheimer's agents, such as Nicergoline™: and CaH-antagonists such as Procardia™, Adalat™, and Calan™.

The popular H2-antagonists which are contemplated for use in the present invention include cimetidine, ranitidine hydrochloride, famotidine, nizatidien, ebrotidine, mifentidine, roxatidine, pisatidine and aceroxatidine.

Active antacid ingredients can include, but are not limited to, the following: aluminum hydroxide, dihydroxyaluminum aminoacetate, aminoacetic acid, aluminum phosphate, dihydroxyaluminum sodium carbonate, bicarbonate, bismuth aluminate, bismuth carbonate, bismuth subcarbonate, bismuth subgallate, bismuth subnitrate, bismuth subsilysilate, calcium carbonate, calcium phosphate, citrate ion (acid or salt), amino acetic acid, hydrate magnesium aluminate sulfate, magaldrate, magnesium aluminosilicate, magnesium carbonate, magnesium glycinate, magnesium hydroxide, magnesium oxide, magnesium trisilicate, milk solids, aluminum mono-ordibasic calcium phosphate, tricalcium phosphate, potassium bicarbonate, sodium tartrate, sodium bicarbonate, magnesium aluminosilicates, tartaric acids and salts.

A variety of nutritional supplements may also be used as active ingredients including virtually any vitamin or mineral. For example, vitamin A, vitamin C, vitamin D, vitamin E, vitamin K, vitamin B6, vitamin B12, thiamine, riboflavin, biotin, folic acid, niacin, pantothenic acid, sodium, potassium, calcium, magnesium, phosphorus, sulfur, chlorine, iron, copper, iodine, zinc, selenium, manganese, choline, chromium, molybdenum, fluorine, cobalt and combinations thereof, may be used.

Examples of nutritional supplements that can be used as active ingredients are set forth in U.S. Patent Application Publication Nos. 2003/0157213 A1, 2003/0206993 and 2003/0099741 A1 which are incorporated in their entirety herein by reference for all purposes.

Various herbals may also be used as active ingredients such as those with various medicinal or dietary supplement properties. Herbals are generally aromatic plants or plant parts and or extracts thereof that can be used medicinally or for flavoring. Suitable herbals can be used singly or in various mixtures. Commonly used herbs include Echinacea, Goldenseal, Calendula, Rosemary, Thyme, Kava Kava, Aloe, Blood Root, Grapefruit Seed Extract, Black Cohosh, Ginseng, Guarana, Cranberry, Gingko Biloba, St. John's Wort, Evening Primrose Oil, Yohimbe Bark, Green Tea, Ma Huang, Maca, Bilberry, Lutein, and combinations thereof.

### Effervescing System Ingredients

An effervescent system may include one or more edible acids and one or more edible alkaline materials. The edible acid(s) and the edible alkaline material(s) may react together to generate effervescence.

In some embodiments, the alkaline material(s) may be selected from, but is not limited to, alkali metal carbonates, alkali metal bicarbonates, alkaline earth metal carbonates, alkaline earth metal bicarbonates, and combinations thereof. The edible acid(s) may be selected from, but is not limited to, citric acid, phosphoric acid, tartaric acid, malic acid, ascorbic acid, and combinations thereof. In some embodiments, an effervescing system may include one or more other ingredients such as, for example, carbon dioxide, oral care ingredients, flavorants, etc.

For examples of use of an effervescing system in a gum, refer to U.S. Provisional Patent No. 60/618,222 filed Oct. 13, 2004, and entitled "Effervescent Pressed Confectionery Tablet Compositions," the contents of which are incorporated herein by reference for all purposes. Other examples can be found in U.S. Pat. No. 6,235,318, the contents of which are incorporated herein by reference for all purposes.

### Appetite Suppressor Ingredients

Appetite suppressors can be ingredients such as fiber and protein that function to depress the desire to consume food. Appetite suppressors can also include benzphetamine, diethylpropion, mazindol, phendimetrazine, phentermine, hoodia (P57), Olibra,™ ephedra, caffeine and combinations thereof. Appetite suppressors are also known by the following trade names: Adipex,™ Adipost,™ Bontril™ PDM, Bontril™ Slow Release, Didrex,™ Fastin,™ Ionamin,™ Mazanor,™ Melfiat,™ Obenix,™ Phendiet,™ Phendiet-105,™ Phentercot,™ Phentride,™ Plegine,™ Prelu-2,TM Pro-Fast,™ PT 105,™ Sanorex,™ Tenuate,™ Sanorex,™ Tenuate,™ Tenuate Dospan,™ Tepanil Ten-Tab,™ Teramine,™ and Zantryl.™ These and other suitable appetite suppressors are further described in the following U.S. patents, all of which are incorporated in their entirety by reference hereto: U.S. Pat. No. 6,838,431 to Portman, U.S. Pat. No. 6,716,815 to Portman, U.S. Pat. No. 6,558,690 to Portman, U.S. Pat. No. 6,468,962 to Portman, U.S. Pat. No. 6,436,899 to Portman.

### Micronutrient Ingredients

Micronutrients can include materials that have an impact on the nutritional well being of an organism even though the quantity required by the organism to have the desired effect is small relative to macronutrients such as protein, carbohydrate, and fat. Micronutrients can include, but are not limited to vitamins, minerals, enzymes, phytochemicals, antioxidants, and combinations thereof.

In some embodiments, vitamins can include fat soluble vitamins such as vitamin A, vitamin D, vitamin E, and vitamin K and combinations thereof. In some embodiments, vitamins can include water soluble vitamins such as vitamin C (ascorbic acid), the B vitamins (thiamine or B1, riboflavoin or B2, niacin or B3, pyridoxine or B6, folic acid or B9, cyanocobalimin or B12, pantothenic acid, biotin), and combinations thereof.

In some embodiments minerals can include but are not limited to sodium, magnesium, chromium, iodine, iron, manganese, calcium, copper, fluoride, potassium, phosphorous, molybdenum, selenium, zinc, and combinations thereof.

In some embodiments micronutrients can include but are not limited to L-carnitine, choline, coenzyme Q10, alpha-lipoic acid, omega-3-fatty acids, pepsin, phytase, trypsin, lipases, proteases, cellulases, and combinations thereof.

In some embodiments phytochemicals can include but are not limited to cartotenoids, chlorophyll, chlorophyllin, fiber, flavanoids, anthocyanins, cyaniding, delphinidin, malvidin, pelargonidin, peonidin, petunidin, flavanols, catechin, epicatechin, epigallocatechin, epigallocatechingallate (EGCG), theaflavins, thearubigins, proanthocyanins, flavonols, quercetin, kaempferol, myricetin, isorhamnetin, flavononeshesperetin, naringenin, eriodictyol, tangeretin, flavones, apigenin, luteolin, lignans, phytoestrogens, resveratrol, isoflavones, daidzein, genistein, glycitein, soy isoflavones, and combinations thereof

### Mouth Moistening Ingredients

Mouth moisteners can include, but are not limited to, saliva stimulators such as acids and salts and combinations thereof In some embodiments, acids can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. In some embodiments, salts can include sodium chloride, calcium chloride, potassium chloride, magnesium chloride, sea salt, sodium citrate, and combinations thereof

Mouth moisteners can also include hydrocolloid materials that hydrate and may adhere to oral surface to provide a sensation of mouth moistening. Hydrocolloid materials can include naturally occurring materials such as plant exudates, seed confectionerys, and seaweed extracts or they can be chemically modified materials such as cellulose, starch, or natural confectionery derivatives. In some embodiments, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, bacterial gums, and combinations thereof. Additionally, in some embodiments, modified natural gums such as propylene glycol alginate, carboxymethyl locust bean gum, low methoxyl pectin, and their combinations can be included. In some embodiments, modified celluloses can be included such as microcrystalline cellulose, carboxymethlcellulose (CMC), methylcellulose (MC), hydroxypropylmethylcellulose (HPCM), and hydroxypropylcellulose (MPC), and combinations thereof.

Similarly, humectants which can provide a perception of mouth hydration can be included. Such humectants can include, but are not limited to glycerol, sorbitol, polyethylene glycol, erythritol, and xylitol. Additionally, in some embodiments, fats can provide a perception of mouth moistening. Such fats can include medium chain triglycerides, vegetable oils, fish oils, mineral oils, and combinations thereof.

### Throat Care Ingredients

Throat soothing ingredients can include analgesics, anesthetics, demulcents, antiseptic, and combinations thereof. In some embodiments, analgesics/anesthetics can include menthol, phenol, hexylresorcinol, benzocaine, dyclonine hydrochloride, benzyl alcohol, salicyl alcohol, and combinations thereof. In some embodiments, demulcents can include but are not limited to slippery elm bark, pectin, gelatin, and combinations thereof In some embodiments, antiseptic ingredients can include cetylpyridinium chloride, domiphen bromide, dequalinium chloride, and combinations thereof

In some embodiments, antitussive ingredients such as chlophedianol hydrochloride, codeine, codeine phosphate, codeine sulfate, dextromethorphan, dextromethorphan hydrobromide, diphenhydramine citrate, and diphenhydramine hydrochloride, and combinations thereof can be included.

In some embodiments, throat soothing agents such as honey, propolis, aloe vera, glycerine, menthol and combinations thereof can be included. In still other embodiments, cough suppressants can be included. Such cough suppressants can fall into two groups: those that alter the consistency or production of phlegm such as mucolytics and expectorants; and those that suppress the coughing reflex such as codeine (narcotic cough suppressants), antihistamines, dextromethorphan and isoproterenol (non-narcotic cough suppressants). In some embodiments, ingredients from either or both groups can be included.

In still other embodiments, antitussives can include, but are not limited to, the group consisting of codeine, dextromethorphan, dextrorphan, diphenhydramine, hydrocodone, noscapine, oxycodone, pentoxyverine and combinations thereof. In some embodiments, antihistamines can include, but are not limited to, acrivastine, azatadine, brompheniramine, chlorpheniramine, clemastine, cyproheptadine, dexbrompheniramine, dimenhydrinate, diphenhydramine, doxylamine, hydroxyzine, meclizine, phenindamine, phenyltoloxamine, promethazine, pyrilamine, tripelennamine, triprolidine and combinations thereof. In some embodiments, non-sedating antihistamines can include, but are not limited to, astemizole, cetirizine, ebastine, fexofenadine, loratidine, terfenadine, and combinations thereof.

In some embodiments, expectorants can include, but are not limited to, ammonium chloride, guaifenesin, ipecac fluid extract, potassium iodide and combinations thereof. In some embodiments, mucolytics can include, but are not limited to, acetylcycsteine, ambroxol, bromhexine and combinations thereof. In some embodiments, analgesic, antipyretic and anti-inflammatory agents can include, but are not limited to, acetaminophen, aspirin, diclofenac, diflunisal, etodolac, fenoprofen, flurbiprofen, ibuprofen, ketoprofen, ketorolac, nabumetone, naproxen, piroxicam, caffeine and mixtures thereof. In some embodiments, local anesthetics can include, but are not limited to, lidocaine, benzocaine, phenol, dyclonine, benzonotate and mixtures thereof.

In some embodiments nasal decongestants and ingredients that provide the perception of nasal clearing can be included. In some embodiments, nasal decongestants can include but are not limited to phenylpropanolamine, pseudoephedrine, ephedrine, phenylephrine, oxymetazoline, and combinations thereof. In some embodiments ingredients that provide a perception of nasal clearing can include but are not limited to menthol, camphor, borneol, ephedrine, eucalyptus oil, peppermint oil, methyl salicylate, bornyl acetate, lavender oil, wasabi extracts, horseradish extracts, and combinations thereof. In some embodiments, a perception of nasal clearing can be provided by odoriferous essential oils, extracts from woods, confectionerys, flowers and other botanicals, resins, animal secretions, and synthetic aromatic materials.

In some embodiments, optional or functional ingredients can include breath fresheners, dental care components, actives, herbals, effervescing systems, appetite suppressors, vitamins, micronutrients, mouth moistening components, throat care components, energy boosting agents, concentration boosting agents, and combinations thereof.

In some embodiments, the modified release component includes at least one ingredient selected from the group comprising flavors, sweeteners, sensates, breath fresheners, dental care components, actives, herbals, effervescing systems, appetite suppressors, potentiators, food acids, micronutrients, mouth moistening components, throat care components, and combinations thereof. These ingredients can be in encapsulated form, in free form, or both.

### Planetary Roller Extruder (PRE)

Now that a review of representative ingredients has been provided, further detail regarding the extruder to be used for manufacturing the gum will be discussed. Reference is now made to the drawings, wherein like reference numerals are used to refer to like elements throughout the disclosure.

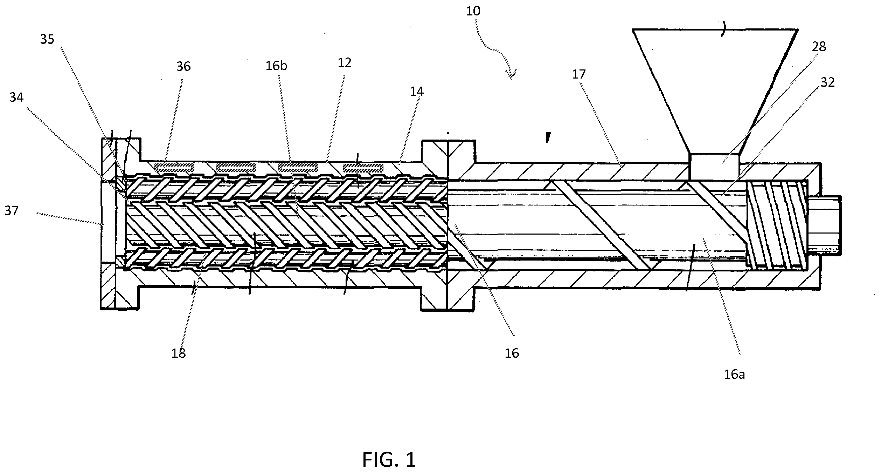

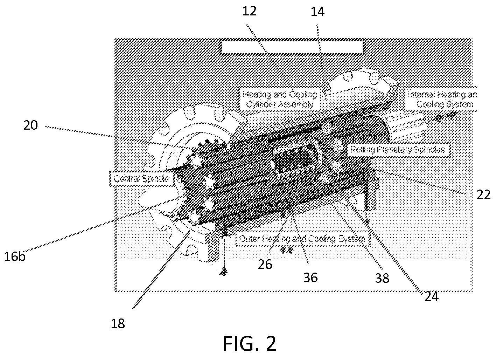

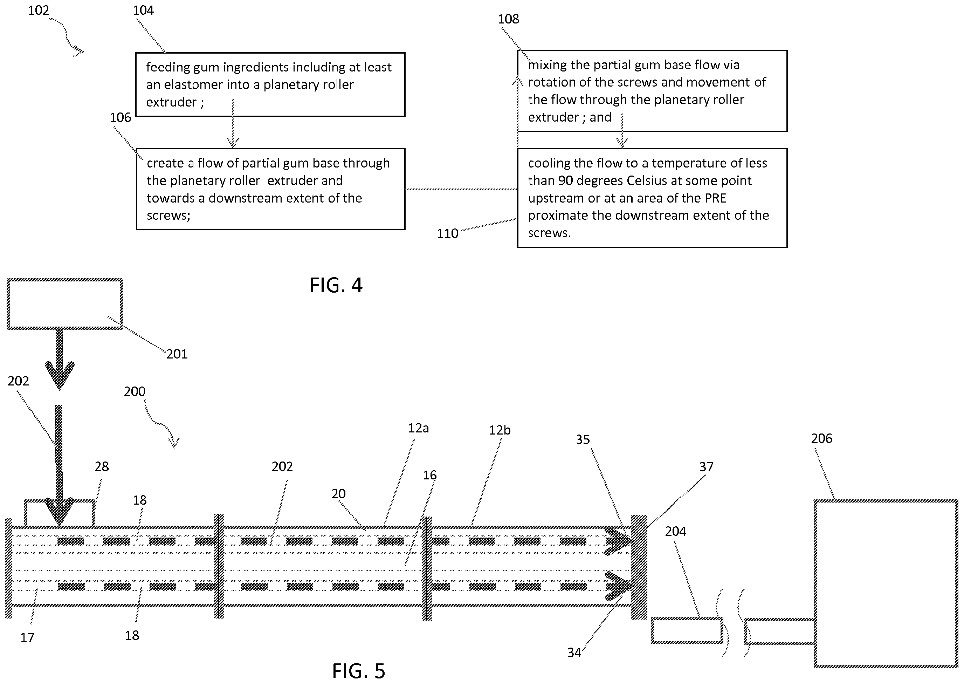

Referring first to Figures 1-3, a planetary roller extruder 10 for use in the below discussed systems and methods is illustrated. The planetary roller extruder 10 is a type of continuous extruder, and may be a single continuous extrusion body or a sectioned body that includes multiple barrels or barrel sections 12 (the term "barrel section" referring to a single barrel, multiple grouped barrels, or a chosen section of a single barrel). For ease of description, a single barrel is shown in detail in Figures 1 and 2 as a barrel section 12. Embodiments including multiple barrel sections are shown schematically in Figures 5, 7, and 9. These sections 12 and the mixing that occurs therein will be discussed later in the disclosure.

As shown in Figures 1-3, the planetary roller extruder 10 includes a cylinder 14 and a rotatable center shaft 16 that runs from a feed end to an extrusion end of the planetary roller extruder 10. As different areas of the planetary roller extruder 10 may include different functions, the center shaft 16 may include different diameters or configurations at different positions of the planetary roller extruder 10. For example, in Figure 1 the center shaft 16 includes a larger diameter in feed section 17 than in barrel section 12. For ease of description, the portion of the center shaft located in the feed section 17 will be referred to as center shaft 16a, and the portion(s) of the center shaft located in the barrel sections 12 will be referred to as center shaft 16b.

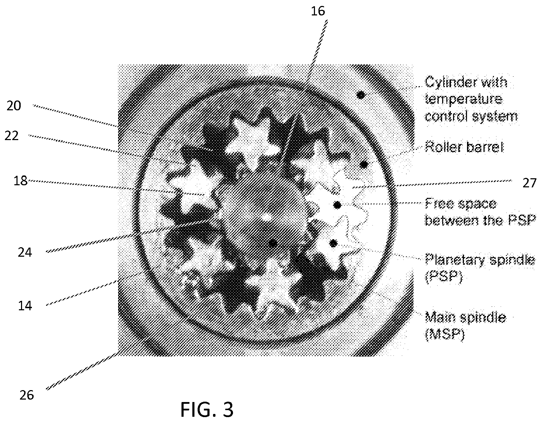

One reason for the discrepancy in diameter that may occur between a diameter of the shaft 16a in the feed section 17 and the diameter of the shaft 16b in the barrel sections 12 is the presence of a plurality of rotatable planetary screws 18 in the barrel sections 12. These screws 18 facilitate mixing of chewing gum product within the barrel sections 12, and are disposed around the center shaft 16b in the barrel sections 12. The planetary screws 18 are rotatable about an axis of the center shaft 16b in the same direction of rotation of the center shaft 16b, and rotatable about their own axes in a direction opposite rotation of the center shaft 16b. In some embodiments (such as that shown in Figures 1 and 3), these planetary screws 18 terminate at the ends of each barrel section 12.

The number of screws 18 used in the planetary roller extruder 10 depends on the particulars of the chewing gum to be manufactured, with at least two screws 18, and more likely three or more screws 18 to be used in each barrel 12 in any gum application. Planetary screws 18 may be disposed about the shaft 16b in the barrel sections 12 in numbers such as but not limited to a general range of 2-18 screws, or more particularly numbers including 3, 6, 9, 12, 15, and 18 screws.

As is best shown in Figures 2 and 3, an inner wall of the cylinder 14 and an outer surface of the central shaft 16b combine to form a mixing annulus 20, in which the screws 18 are disposed, and chewing gum will flow and be mixed. Within this annulus 20, each of the screws 18, center shaft 16b, and cylinder 14 include corresponding or mate-able grooving or toothing 22, 24, 26. This toothing 22, 24, 26 assists in efficiently mixing the gum product flowing through the planetary roller extruder 10, with space (such as space 27 in Figure 3) remaining for gum flow between the teeth/ridges of the screws 18 and the corresponding teeth/ridges of the central shaft 16b and cylinder 14. The screws 18 may have any desirable tooth configuration (i.e. variance in the gaps between the teeth, tooth shape, tooth length, etc.), which will therefore create variation in the corresponding toothing of the center shaft 16b and cylinder 14.

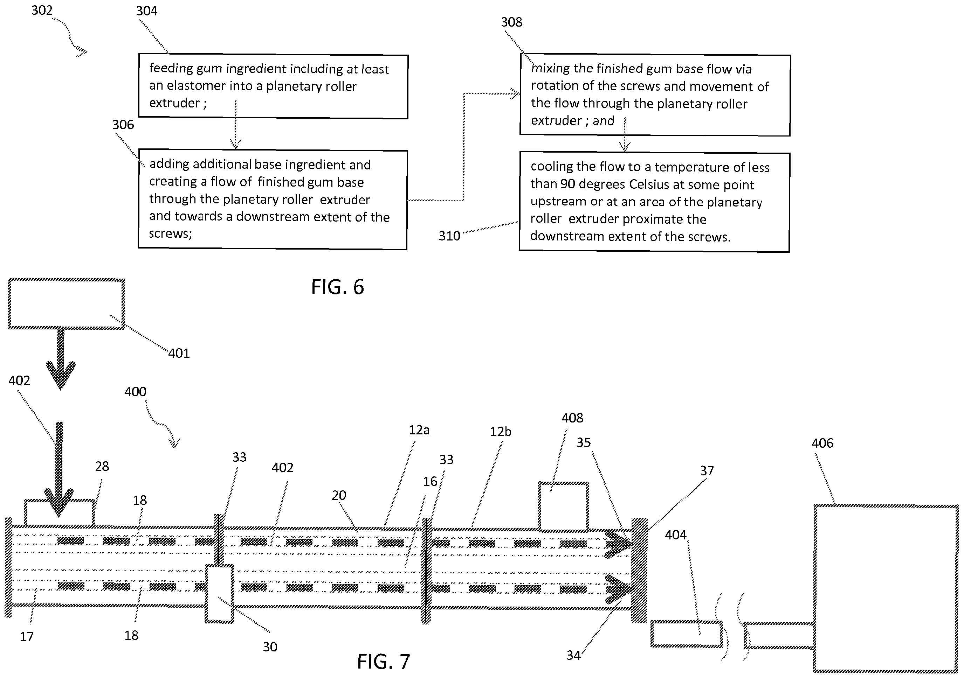

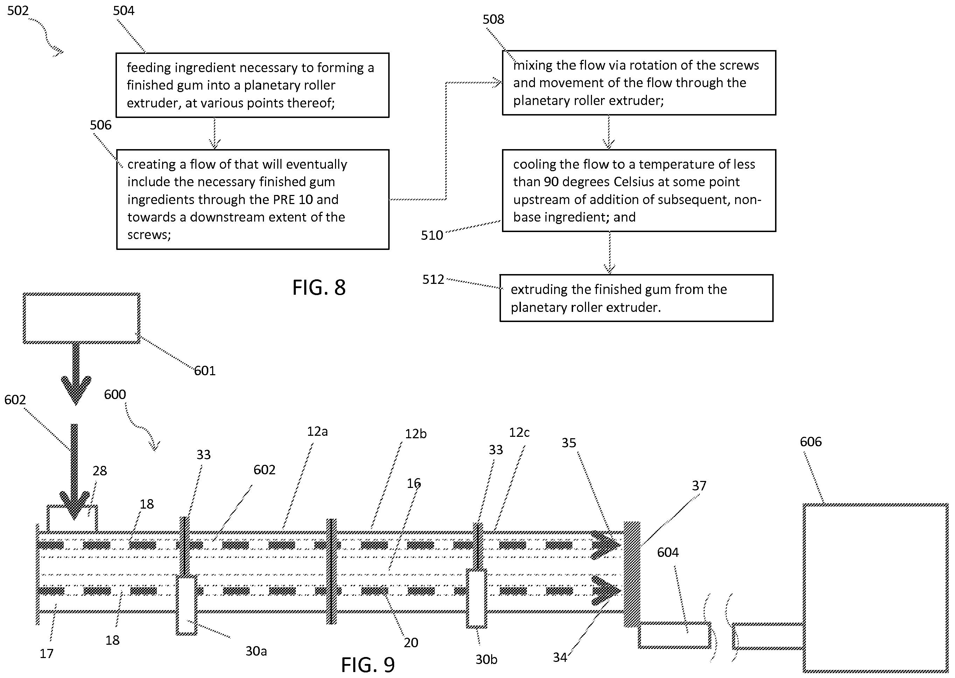

Referring back to Figure 1, it is noted that the planetary roller extruder 10 may include one or more points of entry for ingredients entering the planetary roller extruder, such as point of entry 28 located in a feed zone 32 of the feed section 17, and such as downstream points of entry 30 (please see Figures 7 and 9) located in the barrels 12. These inlets 28, 30 are variously selectable for use depending on the chosen gum application and ingredient to be added. In fact, the feed section 17 and any desirable barrel section 12 may be configured with one or multiple feed inlets 28, 30 if so desired, provided the inlet area is configured for ingredient entry. Such areas may be disposed at zero pressure areas (particularly for solids) or extrusion pressure areas (particularly for liquids) along the planetary roller extruder 10, such as but not limited to areas without planetary screws 18. These areas may be located in the feed section 17, in junction areas 33 (please see Figures 7 and 9) between barrel sections 12, and/or in other areas of barrel sections 12 wherein screws 18 or portions of screws 18 may be present or absent.

There are two types of feed inlets that may be used in some exemplary embodiments of the planetary roller extruder 10. The first type of feed inlet (represented as inlet 28 as shown in Figure 1) is more of a bulk filler that may be used for addition of powder ingredients in the feeding zone 32 of the feed section 17 (though it may be used for any ingredient in any portion of the planetary roller extruder 10 that includes a zero pressure as discussed). This inlet 28 may desirably be used for adding base materials, as will be discussed in greater detail later in the disclosure.

The second type of feed inlet (represented as inlet 30 in Figure 7) that may be used in some embodiments of the planetary roller extruder 10 is a side feed inlet (which, for purposes of this disclosure, may be disposed anywhere around the periphery of the planetary roller extruder 10, between or at the junctions 33), which is shown schematically in Figures 7 and 9. Such side feed inlets 30 may be used downstream of the feeding zone 32 (though it may also be used in the feeding zone 32 and anywhere else within feed section 17), and may enter the planetary roller extruder 10 laterally (i.e. from the side) as opposed to via a hopper. These inlets 30 may desirably be used for adding more sensitive, non-base materials, as will also be discussed in greater detail later in the disclosure. Of course, it is contemplated by this disclosure that a side type inlet may be used in the area of inlet 28, and a bulk feed type inlet may be used in the area of inlet 30.

As shown in Figure 1, the planetary roller extruder 10 may also include an extrusion portion 34 at an output end of thereof. In the exemplary embodiment shown in Figure 1, the barrel 12 includes this portion 34. The extrusion portion 34 is the section from which chewing gum flowing through the planetary roller extruder 10 will ultimately be extruded. It is notable that a downstream extent 35 of the screws 18 and/or a downstream extent of the central shaft 16b are located in proximity to an extrusion or termination point 37 of the planetary roller extruder 10. Indeed, the downstream extent 35 of the screws 18 and/or a downstream extent of the central shaft 16b may terminate such that the ends thereof are flush with the extrusion point 37 (e.g. the end of the planetary roller extruder 10.

Further, while the exemplary embodiment of Figure 1 shows the barrel 12 to include extrusion portion 34, downstream extent 35, and extrusion point 37, the barrel 12 will not necessarily be the downstream extent (i.e. far left) of the planetary roller extruder 10. Indeed, the barrel 12 is also configured for association with one or more additional barrel sections, wherein the downstream extent of those one or more additional barrel sections 12 would include the extrusion portion 34, downstream extent 35, and extrusion point 37. The planetary roller extruder may also be associated with a melt pump or other pumping mechanism configured to assist in extrusion of product and located downstream of (and perhaps connected to) the extrusion portion 34.

Importantly, the planetary roller extruder 10 includes efficient temperature control for the chewing gum mixed therein and extruded therefrom. As shown in Figures 1 and 2, each of the cylinder 14 and central shaft 16 includes a temperature control system, such as but not limited to fluid channels 36, 38 running longitudinally and/or circumferentially therethrough. For at least the below discussed two reasons, these cooling systems each offer an advantage over the prior art.

The first reason relates to configuration of the screws 18 with the central shaft 16b and inner surface of the cylinder 14. Presence of the rotating screws 18 creates a relatively small gap between mating surfaces within the mixing annulus 20 (i.e. respective mating surfaces of the screws 18, inner wall, and shaft 16b). This relatively small gap (as small as ¼ mm or less in some embodiments) creates a reduced thickness in the gum product flowing through the planetary roller extruder 10, thereby exposing product flow to a relatively large cooling surface area at the inner wall of the cylinder 14 and outer surface of the shaft 16b. In addition, contact between the gum flow and the cooling surfaces are constantly renewed via rotation of the screws 18 in the mixing annulus 20. The net result of the surface area exposure and consistent renewal (both the exposure and renewal being caused by the screws 18) is a more efficient cooling of the gum relative to traditional screw extruders.

The second reason relates to the relative low pressure created in the mixing annulus 20 of the planetary roller extruder 10. This low pressure 10 allows the cylinder 14 to include a thinner cylinder wall in comparison with the more pressure tolerant walls (i.e. thicker walls) found in traditional extruders. The relative thinness of the planetary roller extruder walls allows for better heat transfer from the fluid contained in the channels 36 to the gum flow within the annulus 20, since heat from the channels obviously has to be transferred through less wall material in order to reach the flow. As with the first reason, the result of this better temperature transfer is a more efficient cooling of the gum relative to traditional screw extruders.

It should also be noted that temperature control or cooling can be achieved in the planetary roller extruder 10 via mere addition of ingredients that are cooler than the gum flow currently within the annulus 20.

### Mixing Systems & Methods

Now that a description of the planetary roller extruder 10 has been provided above, further detail regarding the methods and systems using the planetary roller extruder for manufacturing the gum will be discussed.

### Partial Chewing Gum Base

With reference to Figures 4 and 5, an exemplary embodiment of a process 102 for manufacturing or extruding a partial chewing gum base, and an exemplary embodiment of a system 200 for manufacturing or extruding a partial chewing gum base, will now be described in detail. As discussed above, a partial chewing gum base includes at least an elastomer, but is absent at least a viscous and/or softener component necessary to form a finished gum base. Accordingly, a first step 104 in the process involves feeding one or more gum ingredients including at least an elastomer into the planetary roller extruder 10. These ingredients may be added in pellet, molten, or raw ingredient form, such as but not limited to powder, liquid, or flake materials, and will desirably, though not necessarily, be added at the bulk inlet 28.

In the exemplary embodiment of Figure 5, the system 200 includes a feed section 17 and two downstream mixing barrel sections 12a and 12b. Of course any number of barrels or barrel sections 12 greater or lesser than two may be used to manufacture or extrude a partial chewing gum base as described herein, but for ease of description, the system 200 will be discussed with reference to the feed section 17 and two barrel sections 12a and 12b as shown in Figure 5.

Gum ingredient first enters the planetary roller extruder 10 from gum ingredient source 201. Upon entry of gum ingredient into the planetary roller extruder 10 via the bulk inlet 28, rotation of at least the center shaft 16 in the feed section 17 will create a flow 202 of the partial gum base ingredient including at least the elastomer through the planetary roller extruder 10 and towards the downstream extent 35 of the screws 18 (step 106). As the partial gum base flow 202 exits the feed section 17, the partial gum base 202 enters barrel section 12a, which includes the beginning portion of the mixing annulus 20 containing the plurality of screws 18. Within this annulus 20, rotating screws 18 mix the partial gum base flow 202 via movement of the flow 202 through the space 27 (as shown best in Figure 3) between the screws 18 and between the teeth of the rotating screws, rotating center shaft 16, and the cylinder 14 (step 108).

While in the barrel section 12a, the one or more ingredients in the partial gum base flow 202 are masticated and plasticized (particularly the elastomer) via mixing achieved by the rotating center shaft 16 and rotating screws 18 within the mixing annulus 20. It should be noted that this masticating and plasticizing via the mixing may occur within a temperature range of 100 to 140 degrees Celsius. This offers an important advantage over standard continuous extruders, through which material can reach temperatures such as 180 degrees Celsius or higher.

In the exemplary embodiment of Figure 5 and system 200, mastication of the elastomer in the partial gum base is achieved at some point within barrels 12a and 12b, and by the time the flow reaches the end of barrel 12a in some embodiments. During flow through at least portions of barrels 12a and 12b, the temperature control channels 36 and 38 (through the cylinder 14 and center shaft 16b as discussed above and with reference to Figures 1-3) actively cool the flow 202 of partial gum base as it is being mixed (via contact of the flow 202 with the outer surface of the central shaft 16b and the inner wall of the cylinder 14). As achieved by this cooling, the flow 202 may reach a temperature of less than 90 degrees Celsius at some point during a conveying of the flow 202 upstream or at an area of the planetary roller extruder 10 proximate the downstream extent 35 of the screws 18 (step 110). In the exemplary embodiment of Figure 5, this downstream extent 35 of the screws 18 is located in proximity to the outlet or extrusion point 37 of the planetary roller extruder 10.

Bringing the flow temperature down from 140 degrees Celsius to at most 90 degrees Celsius upon exiting the planetary roller extruder 10 is advantageous for various reasons. For example, this cooling allows the fully or substantially fully masticated and plasticized partial gum base to be transported to a forming device 206 (such as a pelletizer) or another extruder (such as another continuous extruder that may be a planetary roller extruder) without necessitating heat removal from the partial chewing gum base via a separate heat exchanging device along a transportation means/path 204. In addition, the partial gum base could be mixed with further base ingredients and (more importantly) temperature sensitive, subsequent ingredients (i.e. non-base ingredients) without need for further cooling. These advantages are achieved despite the partial chewing gum base being extruded from the planetary roller extruder 10 in a condition that is substantially absent unmixed or un-masticated elastomer particulates.

Furthermore, the temperature of the partial gum base upon arrival at the forming device 206 may be within 20 degrees Celsius of the temperature of the partial gum base upon exiting the planetary roller extruder 10. The ability of the planetary roller extruder to extrude product at a temperature low enough such that the product may be maintained within a 20 degree Celsius range allows the fully or substantially fully masticated and plasticized partial gum base to be transported to a forming device 206 (such as a pelletizer) without necessitating heat removal from the partial chewing gum base via a separate heat exchanging device. The flow 202 is thereby provided to the forming device 206 (such as a pelletizer) at a temperature within this 20 degree Celsius range, and thus at a temperature cool enough for effective forming (or pelletizing).

It should be noted that the exemplary embodiment illustrated in Figure 5 includes use of at least two screws 18, and more likely three or more or 3-18 screws 18 to achieve the mixing as discussed above and inclusive of both homogenization and mastication. In addition, the center shaft 16 desirably rotates at at least 50 RPM, or at least 100 RPM, with extrusion occurring at at least 50 Kg/hr with an input of less than .2 KWH/KG in order to achieve the extruding at at least 50 Kg/hr.

### Finished Chewing Gum Base

With reference to Figures 6 and 7, an exemplary embodiment of a method 302 for manufacturing or extruding a finished chewing gum base, and an exemplary embodiment of a system 400 for manufacturing or extruding a finished chewing gum base will now be described in detail. As discussed above, a finished chewing gum base is a visco-elastic material that includes at least a viscous component, elastic component (elastomer), and softener component. Accordingly, all of these ingredients will be added to the planetary roller extruder 10 at some point in order to manufacture or extrude a finished gum base, and step 304 in the process will therefore involve feeding a plurality of gum ingredients including at least an elastomer (and eventually at least a viscous and softener component) into the planetary roller extruder 10. These ingredients may be added in pellet, molten, or raw ingredient form, such as but not limited to powder, liquid, or flake materials, and will desirably, though not necessarily, be added at the bulk inlet 28. They also may be added to planetary roller extruder 10 at the same location (i.e. all at the bulk inlet 28) or separately (i.e. with at least some of the finished base ingredients being added via an inlet(s) downstream of the bulk inlet 28). In the exemplary embodiment of Figure 7, some of the plurality of ingredients will be added separately via separate inlets.

Similarly to Figure 5, in the exemplary embodiment of Figure 7 the system 400 includes a feed section 17 and two downstream mixing barrel sections 12a and 12b. Of course any number of barrels or barrel sections 12 greater or lesser than two, such as an embodiment with three or four barrel sections, may be used to manufacture or extrude a finished chewing gum base as described herein. However, for ease of description the system 400 will be discussed with reference to the feed section 17 and two mixing sections 12a and 12b as shown in Figure 7.

In an exemplary embodiment, the elastomer included in the plurality of ingredients may enter the planetary roller extruder 10 via the bulk inlet 28. In an exemplary embodiment, the elastomer enters in the form of ground chunks, perhaps with talc mixed therewith. As mentioned above, some or all of the ingredients necessary for the finished gum base may enter the planetary roller extruder 10 at this point. However, and again for ease of description, the system 400 will be described with only the elastomer entering via the bulk inlet 28.

Elastomer first enters the planetary roller extruder 10 from gum ingredient source 401. Upon entry of the elastomer into the planetary roller extruder 10 via the bulk inlet 28, rotation of at least the center shaft 16 in the feed section 17 will create a flow 402 of at least the elastomer through the planetary roller extruder 10 and towards the downstream extent 35 of the screws 18. As the elastomer flow 402 (which may be considered a partial base flow at this point in mixing/extrusion) exits the feed section 17 the flow 202 enters barrel section 12a, which includes the beginning portion of the mixing annulus 20 containing the plurality of screws 18. In an exemplary embodiment, it is at this point (i.e. at junction area 33) that the remaining ingredients desirable for a finished gum base may enter the planetary roller extruder 10 via the side inlet 30 (step 306), such as that shown in the Figures, or another side inlet disposed along a body of the barrels (the body being disposed between the junctions 33). The remaining ingredients that are solid will typically be added at inlets 30 disposed along the body of the barrels, while remaining ingredients that are liquid will typically be added at junctions 33. While this inlet is shown to communicate with the planetary roller extruder 10 at the junction 33 between barrel sections 12a and 12b, some or all of these ingredients could enter the planetary roller extruder 10 via one or more inlets located at any acceptably configured area of the planetary roller extruder 10. That said, in an exemplary embodiment the additional ingredients desirable for a finished base may enter the flow 402 (making it a finished gum base flow 402) at the junction 33 just upstream of barrel section 12a, and the rotating screws 18 mix the finished gum base flow 402 via movement of the flow 402 through the space 27 (as shown best in Figure 3) between the screws 18 and between the teeth of the rotating screws, rotating center shaft 16, and the cylinder 14 (step 308).

While within the annulus 20 of barrel sections 12a and 12b, the plurality of ingredients in the finished gum base flow 402 are masticated and plasticized (particularly the elastomer) via mixing achieved by the rotating center shaft 16 and rotating screws 18. It should be noted that this masticating and plasticizing via the mixing may occur within a temperature range of 100 to 140 degrees Celsius. This offers an important advantage over standard continuous extruders, through which material can reach temperatures such as 180 degrees Celsius or higher.

In the exemplary embodiment of Figure 7, complete or substantially complete mastication of the elastomer in the finished gum base is achieved at some point within barrels 12a and 12b, and by the time the flow reaches the end of barrel 12a in some embodiments. During flow through at least portions of barrels 12a and 12b, the temperature control channels 36 and 38 (through the cylinder 14 and center shaft 16b as discussed above and with reference to Figures 1-3) actively cool the flow 402 of finished gum based as it is being mixed (via contact of the flow 402 with the outer surface of the central shaft 16b and the inner wall of the cylinder 14). As achieved by this cooling, the flow 402 may reach a temperature of less than 90 degrees C at some point during a conveying of the flow 402 upstream or at an area of the planetary roller extruder 10 proximate the downstream extent 35 of the screws 18 (step 310). In the exemplary embodiment of Figure 7, this downstream extent 35 of the screws 18 is located in proximity to the outlet or extrusion point 37 of the planetary roller extruder 10.

Bringing the flow temperature down from 140 degrees Celsius to at most 90 degrees Celsius upon exiting the planetary roller extruder 10 is advantageous for various reasons. For example, this cooling allows the fully or substantially fully masticated and plasticized finished gum base to be transported directly to a forming device 406 (such as a pelletizer) without necessitating heat removal from the finished chewing gum base via a separate heat exchanging device along a transportation means/path 404. In addition, the finished gum base could be mixed with temperature sensitive, subsequent ingredients (i.e. non-base ingredients) without need for further cooling. These advantages are achieved despite the finished chewing gum base being extruded from the planetary roller extruder 10 in a condition that is substantially absent unmixed or un-masticated elastomer particulates.

Furthermore, the temperature of the finished gum base upon arrival at the forming device 406 may be within 20 degrees Celsius of the temperature of the finished gum base upon exiting the planetary roller extruder 10. The ability of the planetary roller extruder to extrude product at a temperature low enough such that the product may be maintained within a 20 degree Celsius range allows the fully or substantially fully masticated and plasticized finished gum base to be transported to a forming device 406 (such as a pelletizer) without necessitating heat removal from the finished chewing gum base via a separate heat exchanging device. The flow 402 is thereby provided to the forming device 406 (such as a pelletizer) at a temperature within this 20 degree Celsius range, and thus at a temperature cool enough for effective forming (or pelletizing).

It should be noted that the exemplary embodiment illustrated in Figure 7 includes use of at least two screws 18, and more likely three or more, or 3-18 screws 18 to achieve the mixing as discussed above and inclusive of both homogenization and mastication. The system 400 may also include a vacuum 408 (such as a pump) in the last barrel (barrel 12b in the exemplary embodiment of Figure 7, though in the third, fourth, or other most downstream barrel in other embodiments). In an exemplary embodiment, the vacuum 408 may be used to increase flow density by removing aeration and volatiles. Decompression of the flow downstream of such a vacuum 408 may be necessary. Notably, this vacuum 408 (or a form thereof) may be included in any system embodiment discussed herein and shown in Figures.

In addition to the above, it should be noted that the center shaft 16 desirably rotates at at least 50RPM, or at least 100 RPM, with extrusion occurring at at least 50 Kg/hr with an input of less than .2 KWH/KG in order to achieve the extruding at at least 50 Kg/hr. More specifically, the planetary roller extruder 10 is contemplated to include an inner diameter of 70mm to 150mm, 400mm, or 700mm, and may extrude at 50 Kg/hr to 100 Kg/hr, 2 tons/hr, or 2.5 tons/hr.

### Finished Chewing Gum

With reference to Figures 8 and 9, an exemplary embodiment of a process 502 for manufacturing or extruding a chewing gum as a finished chewing gum, and an exemplary embodiment of a system 600 for manufacturing or extruding a chewing gum as a finished chewing gum, will now be described in detail. As discussed above, a finished chewing gum is a chewing gum that is generally ready for preparation to distribute the product to the consumer. As such, though a finished gum may still require temperature conditioning, forming, shaping, packaging and coating, from a compositional standpoint the chewing gum is generally finished. Finished gum typically includes a water soluble bulk portion (described above), a water insoluble gum base portion (described above), and one or more flavoring agents (described above).

All of these above mentioned ingredients will be added to the planetary roller extruder 10 at some point during mixing/extrusion (i.e. prior to output from the planetary roller extruder 10) in order to manufacture or extrude a finished gum, and step 504 in the process will therefore involve feeding all ingredients desirable for formation of a finished chewing gum as defined above into the planetary roller extruder 10 (the desirable ingredients being at least a water soluble bulk portion, a water insoluble gum base portion, and one or more flavoring agents). These ingredients may be added in pellet, molten, or raw ingredient form, such as but not limited to powder, liquid, or flake materials, with at least some of the base ingredients being desirably, though not necessarily, added at the bulk inlet 28. In addition, the various desirable ingredients may also be added to the planetary roller extruder 10 at the same location (i.e. all at the bulk inlet 28) or separately (i.e. with at least some of the base ingredients and/or non-base, water soluble ingredients desirable for a finished gum but not a finished gum base being added downstream of the bulk inlet 28). In an exemplary embodiment, some of the plurality of ingredients will be added separately via side feeding inlets 30.

In the exemplary embodiment of Figure 9, the system 600 includes a feed section 17 and three downstream mixing barrel sections 12a, 12b, and 12c. Of course any number of barrels or barrel sections 12 greater or lesser than three may be used to manufacture a finished chewing gum as described herein, though for ease of description, the system 600 will be discussed with reference to the feed section 17 and three mixing sections 12a, 12b, and 12c as shown in Figure 9. It should also be noted that the entire manufacturing process 502 may occur in the feed section 17 and barrel sections 12a, 12b, and 12c, including addition of the plurality of ingredients desirable for a finished gum into the planetary roller extruder 10, as well as mixing and extrusion/output of the finished gum.

In an exemplary embodiment, at least elastomer may first enter the planetary roller extruder 10 (from gum ingredient source 601) via the bulk inlet 28. However, and as mentioned above, some or all of the ingredients desirable for the finished gum base may enter the planetary roller extruder 10 at this point, and these ingredients may enter in the form of a finished gum base with a partially, substantially fully, or fully masticated elastomer (i.e. in pellet form, etc.). In such an embodiment, the finished gum base with the masticated elastomer may be added to the system with, upstream, or downstream of subsequent ingredients that degrade at the relatively high temperatures associated with mastication of a gum base (i.e. 100 to 140 degrees Celsius), as such temperatures could potentially be avoided within the planetary roller extruder 10 when the added gum base has already been finished and masticated. However, and again for ease of description, the system 600 will be described with only the elastomer entering via the bulk inlet 28, wherein this elastomer will be mixed and masticated within the PRE and then mixed with further gum ingredient within the planetary roller extruder 10.

Upon entering the planetary roller extruder 10 via the bulk inlet 28, rotation of at least the center shaft 16 in the feed section 17 will create a flow 602 of the elastomer through the planetary roller extruder 10 and towards the downstream extent 35 of the screws 18 (step 506). As the elastomer flow 602 (which may be considered a partial base flow at this point in mixing/extrusion) exits the feed section 17, the flow 602 enters barrel section 12a, which includes the beginning portion of the mixing annulus 20 containing the plurality of screws 18. In an exemplary embodiment, it is at this point (i.e. at the junction area 33 between feed section 17 and barrel section 12a) that the remaining ingredients desirable to a finished gum base may enter the planetary roller extruder 10 via the side inlet 30a. While this inlet is shown to communicate with the planetary roller extruder 10 at the junction 33 between barrel sections 12a and 12b, some or all of these ingredients could enter the planetary roller extruder 10 via one or more inlets located at any acceptably configured area of the planetary roller extruder 10. That said, in an exemplary embodiment the additional ingredients desirable for a finished base may enter the flow 602 (making it what could be considered a finished gum base flow 602 at this point) at the junction 33 just upstream of barrel section 12a, and rotating screws 18 mix the flow 602 via movement thereof through the space 27 (as is best shown in Figure 8) between the screws 18 and between the teeth of the rotating screws, rotating center shaft 16, and the cylinder 14 (step 508).

In some embodiments, the plurality of ingredients in the flow 602 are masticated and plasticized (particularly the elastomer) via mixing achieved by the rotating center shaft 16 and rotating screws 18 while within the annulus 20 of barrel sections 12a and 12b,. It should be noted that this masticating and plasticizing via the mixing may occur within a temperature range of 100 to 140 degrees Celsius. This offers an important advantage over standard continuous extruders, through which material can reach temperatures such as 180 degrees Celsius or higher.

In some embodiments, mastication of the elastomer in the finished gum base may therefore be achieved at some point within the annulus 20 of barrels 12a and 12b, but prior to the point at which the flow reaches the second side inlet 30b. As shown in the exemplary embodiment of Figure 9, the second side inlet 30b is located at a junction 33 between barrel section 12b and barrel section 12c. However, this second side inlet 30b (or any number of subsequent inlets) may be located at any acceptably configured location along the planetary roller extruder 10, depending on the specific ingredients to be added.

For example, in embodiments such as that shown in the exemplary embodiment of Figure 9, the second side inlet 30b may be used for addition of subsequent, non-base ingredients desirable to manufacture of a finished gum. As discussed above, these subsequent ingredients are typically water soluble and temperature sensitive (i.e. degradable at higher temperatures), and may include at least one of ingredients falling under the following categories: softeners, bulk sweeteners, high intensity sweeteners, flavoring agents, acids, additional fillers, functional ingredients and combinations thereof. Due to the temperature sensitivity of these ingredients, it may not always be possible to mix the subsequent, non-base ingredients with the finished gum base until the finished gum base is at a temperature less than 90 degrees Celsius.

In order to accommodate this temperature sensitivity of the subsequent ingredients added at the second side inlet 30b, the temperature control systems 36 and 38 (which run through the cylinder 14 and center shaft 16b as discussed above and with reference to Figures 1-3) actively cool the flow 602 of finished gum based as it is being mixed (via contact of the flow with the outer surface of the central shaft 16b and the inner wall of the cylinder 14) at least within portions of the annulus 20 upstream of the second side inlet 30b. In some embodiments, the flow 602 may thereby be cooled to a temperature of less than 90 degrees Celsius at some point upstream or at an area of the planetary roller extruder 10 proximate the second side inlet 30b (step 510). In the exemplary embodiment of Figure 9, this second side input 30b is located at a junction 33 between barrel section 12b and barrel section 12c, but may be located at any acceptably configured position along the planetary roller extruder 10 that is downstream of temperatures that may degrade the subsequent ingredients being added at the inlet 30b.

Bringing the flow temperature down from 140 degrees Celsius to at most 90 degrees Celsius upon reaching the second side input 30b of the planetary roller extruder 10 (and thus addition of the subsequent ingredients) is advantageous for various reasons. For example, this cooling allows the temperature sensitive subsequent ingredients to be added to the fully or substantially fully masticated and plasticized finished gum base within a planetary roller extruder 10 even though the finished chewing gum base may have been masticated within the planetary roller extruder 10 at temperatures in a range of 100 to 140 degrees Celsius (which is lower than most traditional continuous extruders but may be high enough to degrade certain subsequent ingredients), and this potential mastication has occurred substantially absent unmixed or un-masticated elastomer particulates.

Once the subsequent ingredients entering the planetary roller extruder 10 at the second side inlet 30b are sufficiently mixed into the flow 602 such that a finished chewing gum is achieved, the flow 602 (which may now be considered a finished chewing gum flow 602) may be extruded/output from the planetary roller extruder 10 (step 512). In an exemplary embodiment, this finished gum flow is extruded from barrel section 12c via outlet 37, and transported to a further processing device 606, which may involve conditioning, forming, shaping, packaging and/or coating of the now compositionally finished chewing gum.

It should be noted that the exemplary embodiment illustrated in Figure 9 includes use of at least two screws 18, and more likely three or more or 3-18 screws 18 to achieve the mixing as discussed above and inclusive of both homogenization and mastication. In addition, the center shaft 16 desirably rotates at at least 50 RPM, or at least 100 RPM, with extrusion occurring at at least 50 Kg/hr with an input of less than .2 KWH/KG in order to achieve the extruding at at least 50 Kg/hr.

### Finished Chewing Gum including addition of Gum Base with Masticated Elastomer

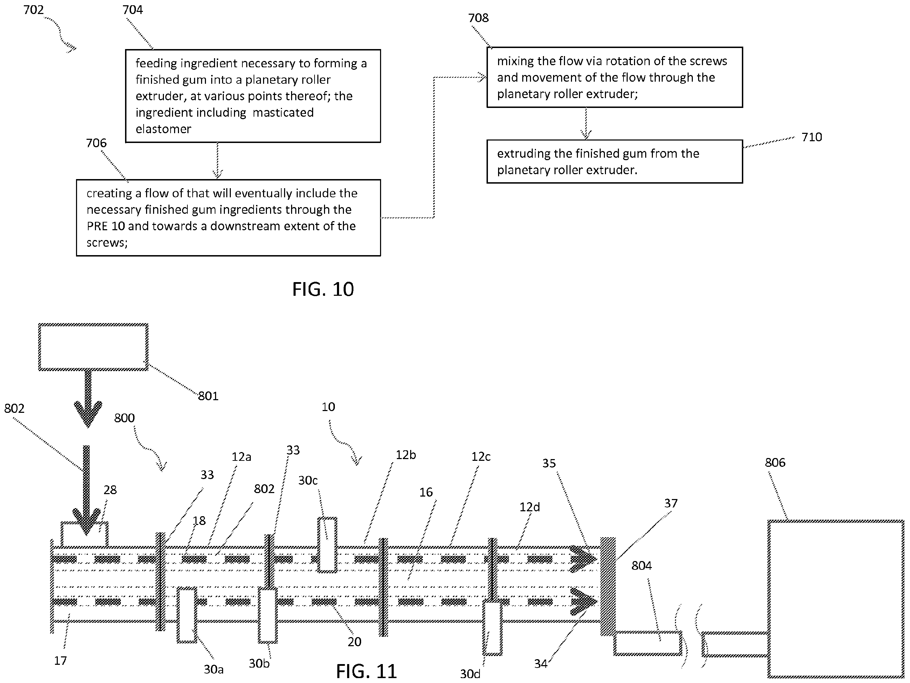

With reference to Figures 10 and 11, an exemplary embodiment of a process 702 for manufacturing or extruding a chewing gum as a finished chewing gum, and an exemplary embodiment of a system 800 for manufacturing or extruding a chewing gum as a finished chewing gum, will now be described in detail. While the described system 800 may include some different and/or additional elements as compared with the above discussed systems 200, 400, and 600, it should be appreciated that the process 702 and any of the above discussed processes 102, 302, and 502 may be employed using the system 800.

As discussed above, a finished chewing gum is a chewing gum that is generally ready for preparation to distribute the product to the consumer. As such, though a finished gum may still require temperature conditioning, forming, shaping, packaging and coating, from a compositional standpoint the chewing gum is generally finished. Finished gum typically includes a water soluble bulk portion (described above), a water insoluble gum base portion (described above), and one or more flavoring agents, colors and the like (described above).

All of these above mentioned ingredients (including an at least partially masticated elastomer) will be added to the planetary roller extruder 10 at some point during mixing/extrusion in order to manufacture or extrude a finished chewing gum, and step 704 in the process will therefore involve feeding all ingredients desirable for formation of a finished chewing gum as defined above into the planetary roller extruder 10 (the desirable ingredients usually including at least a water soluble bulk portion, a water insoluble gum base portion with partially, substantially fully, or fully masticated elastomer, and one or more flavoring agents, colors and the like). These ingredients may be added in pellet, molten, or other form (raw or otherwise), such as but not limited to powder, liquid, gel, or flake materials, with at least some of the gum base ingredients being desirably, though not necessarily, added at the inlets discussed below. In the exemplary embodiment referencing the system 800 shown in Figure 11, the ingredients are added as described below.

System 800 includes a feed section 17 and four downstream mixing barrel sections 12a, 12b, 12c, and 12d. Of course any number of barrels or barrel sections 12 greater or lesser than four may be used to manufacture a finished chewing gum as described herein, though one to four barrels would be desirable. For ease of description, however, the system 800 will be discussed with reference to the feed section 17 and four mixing sections 12a, 12b, 12c and 12d as shown in Figure 11. It should be noted that the entire manufacturing process 702 may occur in planetary roller extruder 10, including addition of the plurality of ingredients desirable for a finished chewing gum, as well as mixing and extrusion/output of the finished chewing gum.

As mentioned above, the plurality of ingredients desirable for a finished chewing gum includes chewing gum base. In the exemplary embodiment discussed hereinbelow, the chewing gum base includes partially, substantially fully, or fully masticated elastomer. Notably, because this finished gum base includes masticated elastomer, the subsequent or additional ingredients desirable for a finished chewing may be added to the system 800 along with, upstream, or downstream of the gum base. This relative flexibility in ingredient addition to the system 800 (or any system having masticated gum base added thereto) can occur because temperatures typically associated with elastomer mastication may be avoided when the added gum base includes an elastomer that has already been masticated. Addition of the various desirable ingredients will be discussed hereinbelow.

Referring to Figure 11, addition of the desirable ingredients may begin with at least one desirable ingredient being introduced into the planetary roller extruder 10 from gum ingredient source 801 via the bulk inlet 28. This ingredient added at this section of the system 800 may be some or all of the base and/or non-base subsequent/additional ingredient. Ingredient added at this section may enter the feed section 17 via gravity with or without temperature treatment, and be moved downstream towards section 12a at the same temperature, an increasing temperature, or a decreasing temperature.

Upon being introduced into the planetary roller extruder 10 via the bulk inlet 28, rotation of at least the center shaft 16 in the feed section 17 will create a flow 802 of the initially added ingredient through the planetary roller extruder 10 and towards the downstream extent 35 of the screws 18 (step 706). As the initially added ingredient flow 802 exits the feed section 17, the flow 802 enters barrel section 12a, which includes the most upstream portion of the mixing annulus 20 containing the plurality of screws 18.

As shown in Figure 11, an exemplary embodiment of system 800 may include a side inlet 30a at section 12a. While side inlet 30a is shown in the Figures to be disposed in the body of section 12a, it should be appreciated that this inlet may also be disposed at a junction between this section and another section. If all of the desirable gum ingredient was not added in the feed section 17, it is through this inlet 30a that further base and/or non-base gum ingredients may be introduced into the system 800. The further ingredient may enter the system 800 in various forms, such as but not limited to molten, powder, pellet, or liquid form. If the further ingredient entering at inlet 30a enters in pellet or powder form, it may be useful for the side inlet 30a to be an active screw feeder. If the further ingredient entering at inlet 30a enters in molten or liquid form, it may be useful for the side inlet 30a to be an active pump feeder or injector. If the further ingredient is molten base, it is notable that this molten base may enter section 12a at about 85-90 degrees Celsius, and be cooled to about 60 degrees Celsius within sections 12a-12d by virtue of being mixed with the potentially cooler ingredient flowing through the system 800, and other temperature control/cooling conditions created by the planetary roller extruder 10 (as will be discussed in greater detail below). This cooling would also occur if molten gum base was added at points upstream or downstream of inlet 30a.

As shown in Figure 11, an exemplary embodiment of system 800 may additionally include a side inlet 30b at a junction 33 between sections 12a and 12b. While side inlet 3b is shown in the Figures to be disposed at the junction 33, it should be appreciated that this inlet may also be disposed along the body of the section. If all of the desirable gum ingredient was not added in the feed section 17 and side inlet 30a, it is through this inlet 30b that still further base and/or non-base gum ingredient may be introduced into the flow 802. This further ingredient entering via inlet 30b may enter in the same forms and via the same devices as discussed with regards to inlet 30a.

As shown in Figure 11, an exemplary embodiment of system 800 may also include a side inlet 30c at section 12b. Like inlet 30a, while side inlet 30c is shown in the Figures to be disposed in the body of section 12b, it should be appreciated that this inlet may also be disposed at a junction between this section and another section. If all of the desirable gum ingredient was not added via the feed section 17, side inlet 30a and side inlet 30b, it is through this inlet 30c that further base and/or non-base gum ingredients may be introduced into the system 800. This further ingredient entering via inlet 30c may enter in the same forms and via the same devices as discussed with regards to inlet 30a.

The flow 802 including gum ingredients added to the system at areas upstream and at feed inlet 30c are mixed together and moved through 12b and 12c via rotation of the screws 18 and center shaft 16. While section 12c may include inlets similar to inlets 30a, 30b, and 30c, Figure 11 shows section 12c to be absent any side feed device, which allows this section to be reserved for degassing of the system 800 and flow 802 therein. For example via a vacuum pump as discussed above). Such degassing may require additional degassing equipment not shown in the Figure. While section 12c is shown in the Figure to be reserved for degassing, it is notable that any of the sections within the system 800 may be reserved for such degassing.

As shown in Figure 11, an exemplary embodiment of system 800 may still further include a side inlet 30d at a junction 33 between sections 12c and 12d. While side inlet 30d is shown in the Figures to be disposed at the junction 33, it should be appreciated that this inlet may also be disposed along the body of the section. If all of the desirable gum ingredient was not added in the feed section 17, side inlet 30a, side inlet 30b, and side inlet 30c, it is through this inlet 30d that still further base and/or non-base gum ingredient would be added. In an exemplary embodiment, the ingredient added at inlet 30d may be some of the more sensitive gum ingredients such as flavor and color ingredients. Similarly to the ingredients mentioned above, this further ingredient entering via inlet 30d may enter in the same forms and via the same devices as discussed with regards to inlet 30a.

Once all of the ingredients desirable for a finished gum (such as but not limited to bulk powder, base with masticated elastomer, plasticizer, non-bulk powder blends, and flavor and color ingredients are introduced into the planetary roller extruder 10 via the various feeds and inlets, these gum ingredients may be sufficiently mixed in the flow 802 such that a homogenous finished chewing gum is achieved (step 708). The flow 802, which may be considered a finished chewing gum flow 802 once all the desirable ingredients are added, may be extruded/output from the planetary roller extruder 10 (step 710). The finished chewing gum flow may be extruded in a form such as but not limited to a rope or sheet. In an exemplary embodiment, this finished chewing gum flow is extruded from barrel section 12d via outlet 37, and transported to a further processing device 806, which may involve conditioning, forming, shaping, packaging and/or coating of the now compositionally finished chewing gum.

It should be noted that while temperature concerns are not as critical to a process (such as process 702) and system (such as system 800) wherein elastomer is added to the planetary roller extruder 10 in an at least partially masticated condition (because mastication temperatures can be avoided), temperature control in such processes and systems remains an important consideration. Indeed, the above discussed gum base (with masticated elastomer) and non-gum base ingredients can be homogenously mixed and moved through the system 800 using a center shaft 16 that advantageously rotates at less than 100 RPM, and more specifically about 50-70 RPM. Such a system uses less energy and creates less heat than a traditional twin screw extruder while accomplishing the same results, which employs center screws that rotate at approximately 150RPM, thereby creating more heat within the system and requiring greater energy than a system employing a center shaft rotating at less than 120 RPM.

In an exemplary embodiment, flow 802 traveling through the system 800 may include a peak temperature of approximately 85-90 degrees Celsius at or around feed of the gum base, with flow or melt temperature in the system 800 decreasing from this point of peak temperature as the flow 802 flows downstream to outlet 37. This heat avoidance is thought to be achieved primarily via the relatively low RPM of the center shaft 16, though such cooling/temperature control may be enhanced via the control systems 36 and 38 discussed above. In addition, the system 800 may be operated such that desirable mixing of chewing gum ingredients can be achieved over a shorter length than that which can be achieved in traditional systems. As such, relatively shorter embodiments of the planetary roller extruder 10 may be chosen for use in systems such as system 800, thereby allowing systems that employ planetary roller extruders 10 to occupy a smaller footprint than traditional systems.

As is alluded to above, it is advantageous that the finished gum base with the masticated elastomer may be added to the system along with, upstream, or downstream of subsequent ingredients that degrade at the relatively high temperatures associated with mastication of a gum base (i.e. 100 to 140 degrees Celsius). This is again because mastication temperatures may be avoided when the added gum base includes an elastomer that has already been masticated. Furthermore, transition of the system 800 from use with one gum recipe to another may be much faster than traditional systems, due to an ability of the planetary roller extruder 10 to essentially self clean while completing operation.

It should be noted that the exemplary embodiment illustrated in Figure 11 includes use of at least two screws 18, and more likely three or more or 3-18 screws 18 to achieve the mixing as discussed above.

### L/D

Length to diameter (L/D) ratio analysis of traditional twin and single screw extruders typically allows one to compare extruders with respect to energy input and capability relative to length of an extruder screw and diameter of an extruder screw or barrel. However, such an analysis is not customarily applied to planetary roller extruders, since one of ordinary skill in the art would view the barrels and internal elements of a planetary roller extruder and the mechanisms and flow patterns existing within the planetary roller extruder differently from conventional screw extruders.

If, however, one were to attempt to apply the principles of L/D analysis to planetary roller extruders, one of ordinary skill could select the planetary screws (i.e. spindles that rotates about the central shaft) as the elements of a planetary roller extruder that most resemble an extruder screw of a traditional screw extruder. In selecting the planetary screws in an exemplary planetary roller extruder for L/D analysis, each screw in the extruder would be lined up end to end to calculate the total "L" in the L/D ratio. Thus, if a single planetary screw typically includes an L/D of around 18/1, the L/D in a typical planetary roller extruder would be at least 54/1 per barrel, as typical planetary roller extruder barrel include at least three planetary screws that rotate about the central shaft and more likely at least 7 planetary rollers with an L/D of at least 126/1 per barrel.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Exemplary embodiments of this invention are described herein, including the best mode known to the inventors for carrying out the invention. Variations of those embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

Further embodiments of the invention are set out in the flowing clauses:
Clause 1. A method for manufacturing chewing gum, the method comprising:
   feeding one or more gum ingredients including at least an elastomer into a continuous extruder including a plurality of screws;
   rotating said plurality of screws and mixing said one or more ingredients via said rotating of said plurality of screws within said continuous extruder;
   forming a partial chewing gum base via said mixing of said one or more ingredients;
   creating a flow of said partial chewing gum base including said one or more ingredients through said continuous extruder towards a downstream extent of said plurality of screws via said rotating; and
   conveying said flow of said partial chewing gum base to a region of said continuous extruder that is proximate said downstream extent of said plurality of screws, wherein said flow includes a temperature of less than 90 degrees Celsius when said flow reaches said downstream extent of said plurality of screws.
Clause 2. The method of clause 1, wherein said a region of said continuous extruder that is proximate said downstream extent of said plurality of screws is an outlet of said continuous extruder, the method further including extruding said flow of said partial chewing gum from said outlet at a temperature of less than 90 degrees C.
Clause 3. The method of clause 1, further including transporting said flow of said partial chewing gum base from said downstream extent of said plurality of screws to a downstream processing device, said transporting occurring absent any heat removal from the partial chewing gum base via a heat exchanging device disposed separately of said continuous extruder.
Clause 4. The method of clause 3, wherein said downstream processing device is a pelletizer.
Clause 5. The method of clause 1, further including masticating and plasticizing said elastomer via said mixing within said continuous extruder.
Clause 6. The method of clause 5, wherein said masticating and plasticizing of said elastomer via said mixing occurs at at most 140 degrees Celsius within said extruder.
Clause 7. The method of clause 1, wherein said continuous extruder is a planetary roller extruder including a temperature controlled outer barrel and a temperature controlled central shaft, said temperature controlled outer barrel and said temperature controlled central shaft delimiting a flow annulus,
   wherein said plurality of screws are disposed within said flow annulus, and said creating of said flow occurring within said flow annulus between said plurality of screws, said central shaft, and an inner wall of said barrel.
Clause 8. The method of clause 7, wherein said plurality of screws, said inner wall, and said central shaft include ridged portions, said mixing occurring via rotation of said central shaft, rotation of said plurality of screws around said central shaft, and said flow of said partial gum base between said ridge portions.
Clause 9. The method of clause 1, wherein said plurality of screws is at least three screws.
Clause 10. The method of clause 7, further including rotating said central shaft at at least 50 RPM.
Clause 11. The method of clause 2, wherein said extruding of said flow of said partial chewing gum base occurs at at least 50 Kg/hr.
Clause 12. The method of clause 11, further including inputting less than .2 KWH/KG for achieving said extruding at at least 50 Kg/hr.
Clause 13. The method of clause 2, wherein said flow of said partial chewing gum base is substantially absent unmixed or un-masticated elastomer particulates upon said extruding from said continuous extruder.
Clause 14. The method of clause 1, wherein said one or more ingredients are added to said continuous extruder as raw ingredient, in molten form, or in pellet form.
Clause 15. A method for manufacturing chewing gum, the method comprising:
   feeding a plurality of gum ingredients including at least an elastomer into a continuous extruder including a plurality of screws;
   rotating said plurality of screws and mixing said plurality of ingredients via said rotating of said plurality screws within said continuous extruder;
   forming a finished chewing gum base via said mixing of said plurality of ingredients;
   creating a flow of said finished chewing gum base including said plurality of ingredients through said continuous extruder towards a downstream extent of said plurality of screws via said rotating; and
   conveying said flow of said finished chewing gum base to a region of said continuous extruder that is proximate said downstream extent of said plurality of screws, wherein said flow includes a temperature of less than 90 degrees Celsius when said flow reaches said downstream extent of said plurality of screws.
Clause 16. The method of clause 15, wherein said a region of said continuous extruder that is proximate said downstream extent of said plurality of screws is an outlet of said continuous extruder, the method further including extruding said flow of said finished chewing gum from said outlet at a temperature of less than 90 degrees C.
Clause 17. The method of clause 15, further including transporting said flow of said finished chewing gum base from said downstream extent of said plurality of screws to a downstream processing device, said transporting occurring absent any heat removal from the finished chewing gum base via a heat exchanging device disposed separately of said continuous extruder.
Clause 18. The method of clause 17, wherein said downstream processing device is a pelletizer.
Clause 19. The method of clause 15, further including masticating and plasticizing said elastomer via said mixing within said continuous extruder.
Clause 20. The method of clause 19, wherein said masticating and plasticizing of said elastomer via said mixing occurs at at most 140 degrees Celsius within said extruder.
Clause 21. The method of clause 15, wherein said continuous extruder is a planetary roller extruder including a temperature controlled outer barrel and a temperature controlled central shaft, said temperature controlled outer barrel and said temperature controlled central shaft delimiting a flow annulus,
   wherein said plurality of screws are disposed within said flow annulus, and said creating of said flow occurring within said flow annulus between said plurality of screws, said central shaft, and an inner wall of said barrel.
Clause 22. The method of clause 21, wherein said plurality of screws, said inner wall, and said central shaft include ridged portions, said mixing occurring via rotation of said central shaft, rotation of said plurality of screws around said central shaft, and said flow of said finished chewing gum base between said ridge portions.
Clause 23. The method of clause 15, wherein said plurality of screws is at least three screws.
Clause 24. The method of clause 21, further including rotating said central shaft at at least 50 RPM.
Clause 25. The method of clause 16, wherein said extruding of said flow of said finished chewing gum base occurs at at least 50 Kg/hr.
Clause 26. The method of clause 25, further including inputting less than .2 KWH/KG for achieving said extruding at at least 50 Kg/hr.
Clause 27. The method of clause 16, wherein said finished chewing gum base is substantially absent unmixed or un-masticated elastomer particulates upon said conveying from said region of said continuous extruder.
Clause 28. The method of clause 15, wherein at least said elastomer is added to said continuous extruder as raw ingredient, in molten form, or in pellet form.
Clause 29. The method of clause 15, wherein said plurality of ingredients and said flow of said finished chewing gum base includes at least a viscous component, said elastomer, and a softener component.
Clause 30. A method for manufacturing chewing gum, the method comprising:
   feeding one or more gum ingredients including at least an elastomer into a continuous extruder including a plurality of screws;
   rotating said plurality of screws and mixing said one or more ingredients via said rotating of said plurality screws within said continuous extruder;
   forming a partial chewing gum base via said mixing of said one or more ingredients;
   creating a flow of said partial chewing gum base including said one or more ingredients through said continuous extruder towards a downstream extent of said plurality of screws via said rotating;
   conveying said flow of said partial chewing gum base to a region of said continuous extruder that is proximate said downstream extent of said plurality of screws, wherein said flow of said partial chewing gum includes a first temperature when said flow reaches said region that is proximate said downstream extent of said plurality of screws;
   transporting said flow of said partial chewing gum base from said downstream extent of said plurality of screws to a downstream processing device, said flow of said partial chewing gum base reaching said downstream processing device at a second temperature; and
   wherein said second temperature of said flow is within 20 degrees Celsius of said first temperature of said flow upon said reaching of said downstream processing device.
Clause 31. The method of clause 30, wherein said a region of said continuous extruder that is proximate said downstream extent of said plurality of screws is an outlet of said continuous extruder, and said transporting of said flow includes an extruding of said flow from said outlet of said continuous extruder.
Clause 32. The method of clause 30, wherein said transporting occurs absent any heat removal from said flow of said partial chewing gum base via a heat exchanging device disposed separately of said continuous extruder.
Clause 33. The method of clause 30, wherein said downstream processing device is a pelletizer.
Clause 34. The method of clause 30, further including masticating and plasticizing said elastomer of said partial chewing gum base via said mixing within said continuous extruder.
Clause 35. The method of clause 34, wherein said masticating and plasticizing of said elastomer via said mixing occurs at at most 140 degrees Celsius within said extruder.
Clause 36. The method of clause 30, wherein said continuous extruder is a planetary roller extruder including a temperature controlled outer barrel and a temperature controlled central shaft, said temperature controlled outer barrel and said temperature controlled central shaft delimiting a flow annulus,
   wherein said plurality of screws are disposed within said flow annulus, and said creating of said flow occurring within said flow annulus between said plurality of screws, said central shaft, and an inner wall of said barrel.
Clause 37. The method of clause 36, wherein said plurality of screws, said inner wall, and said central shaft include ridged portions, said mixing occurring via rotation of said central shaft, rotation of said plurality of screws around said central shaft, and said flow of said partial gum base between said ridge portions.
Clause 38. The method of clause 30, wherein said plurality of screws is at least three screws.
Clause 39. The method of clause 36, further including rotating said central shaft at at least 50 RPM.
Clause 40. The method of clause 31, wherein said extruding of said flow of said partial chewing gum base occurs at at least 50 Kg/hr.
Clause 41. The method of clause 40, further including inputting less than .2 KWH/KG for achieving said extruding at at least 50 Kg/hr.
Clause 42. The method of clause 31, wherein said partial chewing gum base is substantially absent unmixed or un-masticated elastomer particulates upon said extruding from said region of said continuous extruder.
Clause 43. The method of clause 30, wherein said one or more ingredients are added to said continuous extruder as raw ingredients, in molten form, or in pellet form.
Clause 44. A method for manufacturing chewing gum, the method comprising:
   feeding a plurality of gum ingredients including at least an elastomer into a continuous extruder including a plurality of screws;
   rotating said plurality of screws and mixing said plurality of ingredients via said rotating of said plurality screws within said continuous extruder;
   forming a finished chewing gum base via said mixing of said plurality of ingredients;
   creating a flow of said finished chewing gum base including said plurality ingredients through said continuous extruder towards a downstream extent of said plurality of screws via said rotating;
   conveying said flow of said finished chewing gum base to a region of said continuous extruder that is proximate said downstream extent of said plurality of screws, wherein said flow of said finished chewing gum includes a first temperature when said flow reaches said region that is proximate said downstream extent of said plurality of screws;
   transporting said flow of said finished chewing gum base from said downstream extent of said plurality of screws to a downstream processing device, said flow of said finished chewing gum base reaching said downstream processing device at a second temperature; and
   wherein said second temperature of said flow is within 20 degrees Celsius of said first temperature of said flow upon said reaching of said downstream processing device.
Clause 45. The method of clause 44, wherein said a region of said continuous extruder that is proximate said downstream extent of said plurality of screws is an outlet of said continuous extruder, and said transporting of said flow includes an extruding of said flow from said outlet of said continuous extruder.
Clause 46. The method of clause 44, wherein said transporting occurs absent any heat removal from said flow of said finished chewing gum base via a heat exchanging device disposed separately of said continuous extruder.
Clause 47. The method of clause 44, wherein said downstream processing device is a pelletizer.
Clause 48. The method of clause 44, further including masticating and plasticizing said elastomer via said mixing within said continuous extruder.
Clause 49. The method of clause 48, wherein said masticating and plasticizing of said elastomer via said mixing occurs at at most 140 degrees Celsius within said extruder.
Clause 50. The method of clause 44, wherein said continuous extruder is a planetary roller extruder including a temperature controlled outer barrel and a temperature controlled central shaft, said temperature controlled outer barrel and said temperature controlled central shaft delimiting a flow annulus,
   wherein said plurality of screws are disposed within said flow annulus, and said creating of said flow occurs within said flow annulus between said plurality of screws, said central shaft, and an inner wall of said barrel.
Clause 51. The method of clause 50, wherein said plurality of screws, said inner wall, and said central shaft include ridged portions, said mixing occurring via rotation of said central shaft, rotation of said plurality of screws around said central shaft, and said flow of said finished gum base between said ridge portions.
Clause 52. The method of clause 44, wherein said plurality of screws is at least three screws.
Clause 53. The method of clause 50, further including rotating said central shaft at at least 50 RPM.
Clause 54. The method of clause 45, wherein said extruding of said flow of said finished chewing gum base occurs at at least 50 Kg/hr.
Clause 55. The method of clause 54, further including inputting less than .2 KWH/KG for achieving said extruding at at least 50 Kg/hr.
Clause 56. The method of clause 44, wherein said finished chewing gum base is substantially absent unmixed or un-masticated elastomer particulates upon said conveying from said region of said continuous extruder.
Clause 57. The method of clause 44, wherein at least said elastomer is added to said continuous extruder as raw ingredients, in molten form, or in pellet form.
Clause 58. The method of clause 44, wherein said plurality of ingredients and said flow of said finished chewing gum base includes at least a viscous component, said elastomer, and a softener component.
Clause 59. A system for manufacturing chewing gum, the system comprising:
   a gum ingredient source including at least elastomer;
   a continuous extruder configured to receive said elastomer from said gum ingredient source, said continuous extruder including at least three screws, said continuous extruder and said at least three screws being configured to mix and convey a flow of partial chewing gum base including at least said elastomer to a region of said continuous extruder that is proximate a downstream extent of said at least three screws,
   wherein said continuous extruder is configured to convey said flow of said partial chewing gum base to said region of said continuous extruder such that said flow arrives at said region at a temperature of less than 90 degrees C.
Clause 60. The system of clause 59, wherein said continuous extruder is a planetary roller extruder including a temperature controlled outer barrel and a temperature controlled central shaft, said temperature controlled outer barrel and said temperature controlled central shaft delimiting a flow annulus including said at least three screws.
Clause 61. The system of clause 59, wherein said plurality of screws, said inner wall, and said central shaft include ridged portions, said central shaft being configured to rotate and said plurality of screws being configured to rotate around said central shaft.
Clause 62. The system of clause 59, further including a means for transporting said flow of said partial chewing gum base from said region of said continuous extruder to a downstream processing device, said downstream processing device being configured to process said flow of said partial chewing gum base in a desirable manner,
   wherein said transportation means is along a transportation path between said region of said continuous extruder and said downstream processing device, said transportation path being absent a heat exchange device configured to cool said flow of said partial chewing gum base.
Clause 63. The system of clause 62, wherein said downstream processing device is a pelletizer.
Clause 64. The system of clause 62, wherein said downstream processing device is at least one of a holding tank and another continuous extruder.
Clause 65. The system of clause 62, wherein said downstream processing device is at least one forming roller.
Clause 66. The system of clause 59, wherein said a region of said continuous extruder that is proximate said downstream extent of said at least three screws is an outlet of said continuous extruder, and said continuous extruder is configured to extrude said flow of said partial chewing gum base from said outlet at said temperature of less than 90 degrees C.
Clause 67. The system of clause 60, wherein said temperature controlled outer barrel and said temperature controlled central shaft comprise a temperature control system configured to lower said temperature of said flow to less than 90 degrees Celsius at or upstream of said region.
Clause 68. A system for manufacturing chewing gum, the system comprising:
   a gum ingredient source including at least elastomer;
   a continuous extruder configured to receive said elastomer from said gum ingredient source, said continuous extruder including at least three screws, said continuous extruder and said at least three screws being configured to mix and convey a flow of finished chewing gum base including at least said elastomer to a region of said continuous extruder that is proximate a downstream extent of said at least three screws,
   wherein said continuous extruder is configured to convey said flow of said finished chewing gum base to said region of said continuous extruder such that said flow arrives at said region at a temperature of less than 90 degrees C.
Clause 69. The system of clause 68, wherein said continuous extruder is a planetary roller extruder including a temperature controlled outer barrel and a temperature controlled central shaft, said temperature controlled outer barrel and said temperature controlled central shaft delimiting a flow annulus including said at least three screws.
Clause 70. The system of clause 68, wherein said at least three screws, said inner wall, and said central shaft include ridged portions, said central shaft being configured to rotate and said plurality of screws being configured to rotate around said central shaft.
Clause 71. The system of clause 68, further including a means for transporting said flow of said finished chewing gum base from said region of said continuous extruder to a downstream processing device, said downstream processing device being configured to process said flow of said finished chewing gum base in a desirable manner,
   wherein said transportation means is along a transportation path between said region of said continuous extruder and said downstream processing device, said transportation path being absent a heat exchange device configured to cool said flow of said finished chewing gum base.
Clause 72. The system of clause 71, wherein said downstream processing device is a holding tank.
Clause 73. The system of clause 71, wherein said downstream processing device is a pelletizer.
Clause 74. The system of clause 71, wherein said downstream processing device is at least one forming roller.
Clause 75. The system of clause 68, wherein said a region of said continuous extruder that is proximate said downstream extent of said at least three screws is an outlet of said continuous extruder, and said continuous extruder is configured to extrude said flow of said finished chewing gum base from said outlet at said temperature of less than 90 degrees C.
Clause 76. The system of clause 69, wherein said temperature controlled outer barrel and said temperature controlled central shaft comprise a temperature control system configured to lower said temperature of said flow to less than 90 degrees Celsius at or upstream of said region
Clause 77. A system for manufacturing chewing gum, the system comprising:
   a gum ingredient source including at least elastomer;
   a continuous extruder configured to receive said elastomer from said gum ingredient source, said continuous extruder including at least three screws, said continuous extruder and said at least three screws being configured to mix and convey a flow of partial chewing gum base including at least said elastomer to a region of said continuous extruder that is proximate a downstream extent of said at least three screws,
   a means for transporting said flow of said partial chewing gum base from said region of said continuous extruder to a downstream processing device, said downstream processing device being configured to process said flow of said partial chewing gum base in a desirable manner,
   wherein said continuous extruder is configured such that said flow of said partial chewing gum base is conveyed from said region of said continuous extruder at a first temperature and arrives at said downstream processing device at a second temperature, said second temperature being maintained within 20 degrees of said first temperature during transportation of said flow of said partial chewing gum base from said region of said continuous extruder to said downstream processing device.
Clause 78. The system of clause 77, wherein said continuous extruder is a planetary roller extruder including a temperature controlled outer barrel and a temperature controlled central shaft, said temperature controlled outer barrel and said temperature controlled central shaft delimiting a flow annulus including said at least three screws.
Clause 79. The system of clause 78, wherein said at least three screws, said inner wall, and said central shaft include ridged portions, said central shaft being configured to rotate and said at least three screws being configured to rotate around said central shaft.
Clause 80. The system of clause 77, wherein said transportation means is along a transportation path between said region of said continuous extruder and said downstream processing device, said transportation path being absent a heat exchange device configured to cool said flow of said partial chewing gum base.
Clause 81. The system of clause 77, wherein said downstream processing device is at least one of a holding tank and an additional extruder.
Clause 82. The system of clause 77, wherein said downstream processing device is a pelletizer.
Clause 83. The system of clause 77, wherein said forming device is at least one forming roller.
Clause 84. The system of clause 77, wherein said a region of said continuous extruder that is proximate said downstream extent of said at least three screws is an outlet of said continuous extruder, and said continuous extruder is configured to extrude said flow of said partial chewing gum base at said first temperature.
Clause 85. The system of clause 77, wherein said temperature controlled outer barrel and said temperature controlled central shaft comprise a temperature control system configured to lower said flow to said first temperature at or upstream of said region.
Clause 86. A system for manufacturing chewing gum, the system comprising:
   a gum ingredient source including at least elastomer;
   a continuous extruder configured to receive said elastomer from said gum ingredient source, said continuous extruder including at least three screws, said continuous extruder and said at least three screws being configured to mix and convey a flow of finished chewing gum base including at least said elastomer to a region of said continuous extruder that is proximate a downstream extent of said at least three screws,
   a means for transporting said flow of said finished chewing gum base from said region of said continuous extruder to a downstream processing device, said downstream processing device being configured to process said flow of said finished chewing gum base in a desirable manner,
   wherein said continuous extruder is configured such that said flow of said finished chewing gum base is conveyed from said region of said continuous extruder at a first temperature and arrives at said downstream processing device at a second temperature, said second temperature being maintained within 20 degrees of said first temperature during transportation of said flow of said finished chewing gum base from said region of said continuous extruder to said downstream processing device.
Clause 87. The system of clause 86, wherein said continuous extruder is a planetary roller extruder including a temperature controlled outer barrel and a temperature controlled central shaft, said temperature controlled outer barrel and said temperature controlled central shaft delimiting a flow annulus including said at least three screws.
Clause 88. The method of clause 87, wherein said at least three screws, said inner wall, and said central shaft include ridged portions, said central shaft being configured to rotate and said at least three screws being configured to rotate around said central shaft.
Clause 89. The system of clause 86, wherein said transportation means is along a transportation path between said continuous extruder and said downstream processing device, said transportation path being absent a heat exchange device configured to cool said flow of said finished chewing gum base.
Clause 90. The system of clause 86, wherein said downstream processing device is a holding tank.
Clause 91. The system of clause 86, wherein said downstream processing device is a pelletizer.
Clause 92. The system of clause 86, wherein said downstream processing device is at least one forming roller.
Clause 93. The method of clause 86, wherein said a region of said continuous extruder that is proximate said downstream extent of said at least three screws is an outlet of said continuous extruder, and said continuous extruder is configured to extrude said flow of said finished chewing gum base at said first temperature.
Clause 94. The system of clause 86, wherein said temperature controlled outer barrel and said temperature controlled central shaft comprise a temperature control system configured to lower said flow to said first temperature at or upstream of said region.
Clause 95. A method for manufacturing chewing gum, the method comprising:
   providing a planetary roller extruder with at least a first barrel section and a second barrel section;
   feeding at least an elastomer into said planetary roller extruder;
   masticating said elastomer in said first barrel section, and transporting said elastomer to said second barrel section;
   feeding at least one additional ingredient into said second barrel section; and
   mixing said elastomer and said at least one additional ingredient in said second barrel section.
Clause 96. The method of clause 95, further including extruding said elastomer and said at least one addition ingredient from said planetary roller extruder at a temperature of less than 90 degrees C.
Clause 97. The method of clause 95, wherein said elastomer and said at least one additional ingredient comprise a finished gum base.
Clause 98. The method of clause 95, further including plasticizing said elastomer within said first barrel section.
Clause 99. The method of clause 98, wherein said masticating and plasticizing occurs at a temperature of at most 140 degrees Celsius.
Clause 100. The method of clause 95, wherein a temperature during said masticating in said first barrel section is greater than a temperature of said mixing in said second barrel section.
Clause 101. The method of clause 97, wherein said finished chewing gum base includes at least said elastomer and a filler upon said passing from said second barrel section.
Clause 102. The method of clause 95, further including providing at least a third barrel section with said planetary roller extruder.
Clause 103. The method of clause 102, wherein said elastomer and said at least one additional ingredient comprise a finished chewing gum base, the method further including:
   transporting said finished chewing gum base from said second barrel section to said third barrel section, feeding at least one subsequent ingredient into said third barrel section, and
   mixing said finished chewing gum base and said at least one subsequent ingredient in said third barrel section to form a finished chewing gum.
Clause 104. The method of clause 103, wherein a temperature during said mixing in said first barrel section is greater than a temperature of said mixing in said second barrel section, and said temperature during said mixing in said second barrel section is greater than a temperature of said mixing in said third barrel section.
Clause 105. The method of clause 104, wherein said temperature in said third barrel section is at most 90 degrees C.
Clause 106. The method of clause 103, wherein said finished gum composition includes at least said elastomer, a filler, and a sweetener.
Clause 107. The method of clause 95, wherein said feeding incudes feeding at least said elastomer to said planetary roller extruder as raw ingredient, in molten form, or in pellet form.
Clause 108. A method for manufacturing gum, the method comprising:
   providing a planetary roller extruder including a cylinder with an inner cylinder wall and a central shaft with an outer shaft surface, said inner cylinder wall and said central shaft delimiting a mixing annulus;
   providing a plurality of planetary screws within said mixing annulus;
   feeding one or more gum ingredients including at least an elastomer into said planetary roller extruder; rotating said plurality of screws and mixing said one or more ingredients via said rotating of said plurality screws within said planetary roller extruder;
   masticating said elastomer via said mixing;
   forming a partial chewing gum base via said mixing and said masticating;
   creating a flow of said partial chewing gum base including said one or more ingredients through said planetary roller extruder towards a downstream extent of said plurality of screws via said rotating;
   controlling a temperature of said outer shaft surface via a temperature control system within said central shaft;
   controlling a temperature of said inner cylinder wall via a temperature control system within said barrel; and
   controlling temperature of said flow of said partial chewing gum base via contact between said flow of said partial chewing gum base and said cylinder wall and contact between said flow of said partial chewing gum base and said outer shaft surface.
Clause 109. The method of clause 108, further including cooling said flow of said partial chewing gum base to a temperature of less than 90 degrees C downstream of said masticating, said cooling occurring via said contact between said flow of said partial chewing gum base and said cylinder wall and said contact between said flow of said partial chewing gum base and said outer shaft surface.
Clause 110. The method of clause 108, further including extruding said flow of said partial gum base from said planetary roller extruder downstream of said cooling.
Clause 111. A method for manufacturing gum, the method comprising:
   providing a planetary roller extruder including a cylinder with an inner cylinder wall and a central shaft with an outer shaft surface, said inner cylinder wall and said central shaft delimiting a mixing annulus;
   providing a plurality of planetary screws within said mixing annulus;
   feeding a plurality of gum ingredients including at least an elastomer into said planetary roller extruder;
   rotating said plurality of screws and mixing said plurality of ingredients via said rotating of said plurality screws within said planetary roller extruder;
   masticating at least said elastomer via said mixing;
   forming a finished chewing gum base via said mixing and said masticating;
   creating a flow of said finished chewing gum base including said plurality of ingredients through said planetary roller extruder towards a downstream extent of said plurality of screws via said rotating;
   controlling a temperature of said outer shaft surface via a temperature control system within said central shaft;
   controlling a temperature of said inner cylinder wall via a temperature control system within said barrel; and
   controlling temperature of said flow of said finished chewing gum base via contact between said flow of finished partial chewing gum base and said cylinder wall and contact between said flow of said finished chewing gum base and said outer shaft surface.
Clause 112. The method of clause 111, further including cooling said flow of said finished chewing gum base to a temperature of less than 90 degrees C downstream of said masticating, said cooling occurring via said contact between said flow of said finished chewing gum base and said cylinder wall and said contact between said flow of said finished chewing gum base and said outer shaft surface.
Clause 113. The method of clause 112, further including extruding said flow of said finished gum base from said planetary roller extruder downstream of said cooling.
Clause 114. A method for manufacturing chewing gum, the method comprising:
   providing a planetary roller extruder including a cylinder with an inner cylinder wall and a central shaft with an outer shaft surface, said inner cylinder wall and said central shaft delimiting a mixing annulus;
   providing a plurality of planetary screws within said mixing annulus;
   feeding a plurality of gum ingredients including at least an elastomer into said planetary roller extruder;
   rotating said plurality of screws and mixing said one or more ingredients via said rotating of said plurality screws within said planetary roller extruder;
   masticating said plurality of ingredients within said flow via said mixing;
   forming a finished chewing gum base via said mixing and said masticating of said plurality of ingredients;
   creating a flow of said finished chewing gum base including said plurality of ingredients through said planetary roller extruder towards a downstream extent of said plurality of screws via said rotating;
   controlling a temperature of said outer shaft surface via a temperature control system within said central shaft;
   controlling a temperature of said inner cylinder wall via a temperature control system within said barrel;
   feeding at least one subsequent gum ingredient into said planetary roller extruder downstream of said masticating;
   mixing said finished chewing gum base with said at least one subsequent ingredient via within said mixing annulus to form a finished chewing gum; and
   extruding said finished chewing gum.
Clause 115. The method of clause 114, wherein said at least one ingredient and said plurality of ingredients combine to include ingredients that are desirable for forming a finished gum.
Clause 116. The method of clause 114, further including cooling of said flow of said finished chewing gum base to a temperature of less than 90 degrees C via contact between said flow of said finished chewing gum base and said cylinder wall and contact between said flow of said finished chewing gum base and said outer shaft surface.
Clause 117. The method of clause 116, wherein said feeding of said at least one subsequent gum ingredient occurs downstream of said cooling.
Clause 118. A method for manufacturing chewing gum, the method comprising:
   providing a planetary roller extruder including a cylinder with an inner cylinder wall and a central shaft with an outer shaft surface, said inner cylinder wall and said central shaft delimiting a mixing annulus;
   providing a plurality of planetary screws within said mixing annulus;
   feeding at least one first gum ingredient including an at least partially masticated elastomer into said planetary roller extruder;
   rotating said plurality of screws and mixing said at least one first gum ingredient within said planetary roller extruder;
   creating a flow of said at least one first gum ingredient through said planetary roller extruder towards a downstream extent of said plurality of screws via said rotating;
   feeding at least one second gum ingredient into said planetary roller extruder;
   mixing said at least one first gum ingredient with said at least one second gum ingredient via said plurality of screws within said mixing annulus to form a finished chewing gum; and
   extruding said finished chewing gum.
Clause 119. The method of clause 118, wherein said at least partially masticated elastomer is fed into said planetary roller extruder in pellet form.
Clause 120. The method of clause 118, wherein said at least partially masticated elastomer is fed into said planetary roller extruder in molten form.
Clause 121. The method of clause 118, wherein said at least one first gum ingredient including said at least partially masticated elastomer comprises a finished gum base.
Clause 122. The method of clause 118, wherein at least a portion of said feeding of said at least one second gum ingredient occurs upstream of said feeding of said at least one first gum ingredient.
Clause 123. The method of clause 118, wherein at least a portion of said feeding of said at least one second gum ingredient occurs downstream of said feeding of said at least one first gum ingredient.
Clause 124. The method of clause 118, wherein at least a portion of said feeding of said at least one second gum ingredient occurs along with said feeding of said at least one first gum ingredient.
Clause 125. The method of clause 118, wherein said flow within said planetary roller extruder includes a maximum temperature of 90 degrees Celsius during said mixing.
Clause 126. A method for manufacturing chewing gum, the method comprising:
   feeding at least one first gum ingredient including an elastomer into a continuous extruder including a plurality of screws and a central shaft;
   feeding at least one second gum ingredient into said continuous extruder;
   rotating said plurality of screws and mixing said at least one first gum ingredient and said at least one second gum ingredient via said rotating of said plurality of screws within said continuous extruder;
   forming a finished chewing gum via said mixing of said at least one first and said at least one second gum ingredients; and
   creating a flow of said finished chewing gum including said at least one first and said at least one second gum ingredients through said continuous extruder towards a downstream extent of said plurality of screws via said rotating,
   wherein said mixing of said at least one first and said at least one second gum ingredients, said forming of said finished chewing gum, and said conveying of said finished chewing gum occurs via a rotating of at least said central shaft or at least one of said plurality of screws at less than 120 RPM.
Clause 127. The method of clause 126, wherein said elastomer is at least partially masticated prior to said feeding of said at least one first gum ingredient.
Clause 128. The method of clause 126, wherein said conveying of said finished chewing gum occurs via a rotating of at least said central shaft or at least one of said plurality of screws at 60-70 RPM.

## Claims

1. A method for manufacturing chewing gum, the method comprising:
feeding one or more gum ingredients including at least an elastomer into a continuous extruder including a plurality of screws;
rotating said plurality of screws and mixing said one or more ingredients via said rotating of said plurality screws within said continuous extruder;
forming a partial chewing gum base via said mixing of said one or more ingredients;
creating a flow of said partial chewing gum base including said one or more ingredients through said continuous extruder towards a downstream extent of said plurality of screws via said rotating;
conveying said flow of said partial chewing gum base to a region of said continuous extruder that is proximate said downstream extent of said plurality of screws, wherein said flow of said partial chewing gum includes a first temperature when said flow reaches said region that is proximate said downstream extent of said plurality of screws;
transporting said flow of said partial chewing gum base from said downstream extent of said plurality of screws to a downstream processing device, said flow of said partial chewing gum base reaching said downstream processing device at a second temperature; and
wherein said second temperature of said flow is within 20 degrees Celsius of said first temperature of said flow upon said reaching of said downstream processing device.

2. The method of claim 1, wherein said a region of said continuous extruder that is proximate said downstream extent of said plurality of screws is an outlet of said continuous extruder, and said transporting of said flow includes an extruding of said flow from said outlet of said continuous extruder.

3. The method of claim 1, wherein said transporting occurs absent any heat removal from said flow of said partial chewing gum base via a heat exchanging device disposed separately of said continuous extruder.

4. The method of claim 1, wherein said downstream processing device is a pelletizer.

5. The method of claim 1, further including masticating and plasticizing said elastomer of said partial chewing gum base via said mixing within said continuous extruder;
and optionally,
wherein said masticating and plasticizing of said elastomer via said mixing occurs at at most 140 degrees Celsius within said extruder.

6. The method of claim 1, wherein said continuous extruder is a planetary roller extruder including a temperature controlled outer barrel and a temperature controlled central shaft, said temperature controlled outer barrel and said temperature controlled central shaft delimiting a flow annulus,
wherein said plurality of screws are disposed within said flow annulus, and said creating of said flow occurring within said flow annulus between said plurality of screws, said central shaft, and an inner wall of said barrel;
and optionally,
wherein said plurality of screws, said inner wall, and said central shaft include ridged portions, said mixing occurring via rotation of said central shaft, rotation of said plurality of screws around said central shaft, and said flow of said partial gum base between said ridge portions;
or,
further including rotating said central shaft at at least 50 RPM.

7. The method of claim 1, wherein said plurality of screws is at least three screws.

8. The method of claim 2, wherein said extruding of said flow of said partial chewing gum base occurs at at least 50 Kg/hr;
and optionally,
further including inputting less than .2 KWH/KG for achieving said extruding at at least 50 Kg/hr.

9. The method of claim 2, wherein said partial chewing gum base is substantially absent unmixed or un-masticated elastomer particulates upon said extruding from said region of said continuous extruder.

10. The method of claim 1, wherein said one or more ingredients are added to said continuous extruder as raw ingredients, in molten form, or in pellet form.

11. A system for manufacturing chewing gum, the system comprising:
a gum ingredient source including at least elastomer;
a continuous extruder configured to receive said elastomer from said gum ingredient source, said continuous extruder including at least three screws, said continuous extruder and said at least three screws being configured to mix and convey a flow of partial chewing gum base including at least said elastomer to a region of said continuous extruder that is proximate a downstream extent of said at least three screws,
a means for transporting said flow of said partial chewing gum base from said region of said continuous extruder to a downstream processing device, said downstream processing device being configured to process said flow of said partial chewing gum base in a desirable manner,
wherein said continuous extruder is configured such that said flow of said partial chewing gum base is conveyed from said region of said continuous extruder at a first temperature and arrives at said downstream processing device at a second temperature, said second temperature being maintained within 20 degrees of said first temperature during transportation of said flow of said partial chewing gum base from said region of said continuous extruder to said downstream processing device.

12. The system of claim 11, wherein said continuous extruder is a planetary roller extruder including a temperature controlled outer barrel and a temperature controlled central shaft, said temperature controlled outer barrel and said temperature controlled central shaft delimiting a flow annulus including said at least three screws;
and optionally,
wherein said at least three screws, said inner wall, and said central shaft include ridged portions, said central shaft being configured to rotate and said at least three screws being configured to rotate around said central shaft.

13. The system of claim 1, wherein said transportation means is along a transportation path between said region of said continuous extruder and said downstream processing device, said transportation path being absent a heat exchange device configured to cool said flow of said partial chewing gum base.

14. The system of claim 1, wherein said downstream processing device is at least one of a holding tank and an additional extruder.

15. The system of claim 1:
wherein said downstream processing device is a pelletizer;
or,
wherein said forming device is at least one forming roller;
or,
wherein said a region of said continuous extruder that is proximate said downstream extent of said at least three screws is an outlet of said continuous extruder, and said continuous extruder is configured to extrude said flow of said partial chewing gum base at said first temperature;
or,
wherein said temperature controlled outer barrel and said temperature controlled central shaft comprise a temperature control system configured to lower said flow to said first temperature at or upstream of said region.
